Europäisches Patentamt

European Patent Office

Office européen des brevets

(11) Numéro de publication: **0 048 207**
**B1**

## (12) FASCICULE DE BREVET EUROPEEN

(45) Date de publication du fascicule du brevet:
**15.02.84**

(51) Int. Cl.³: **C 12 C 9/02**

(21) Numéro de dépôt: **81401426.2**

(22) Date de dépôt: **14.09.81**

(54) Nouveau procédé de valorisation des matières amères du houblon par phototransformation et appareillage pour la mise en oeuvre de ce procédé.

(30) Priorité: **16.09.80 FR 8019902**

(43) Date de publication de la demande:
**24.03.82 Bulletin 82/12**

(45) Mention de la délivrance du brevet:
**15.02.84 Bulletin 84/7**

(84) Etats contractants désignés:
**AT BE CH DE FR GB LI NL**

(56) Documents cités:
**FR - A - 1 327 648**
**FR - A - 2 306 262**
**US - A - 3 977 953**
**US - A - 3 981 294**
**US - A - 4 215 673**
**US - A - 4 220 139**

**AMERICAN SOCIETY OF BREWING CHEMISTS INC. vol. 38, no. 2, 1980 US J.C. ANDRE et al.: "Best Conditions for Pilot Scale Phototransformation of Alpha-Acids", pages 61-67**
**JOURNAL OF INSTITUTE OF BREWING, vol. 86, no. 1, janvier-février 1980 Londres, GB M.L. VIRIOT et al.: "Improvement of the Bitterness of Hops: Photoreactions of Alpha Acids", pages 21-24**

(73) Titulaire: **TEPRAL, 2, rue Gabriel Bour,**
**F-54250 Champigneulles (FR)**

(72) Inventeur: **Andre, Jean-Claude, 38 bis, Rue Sellier,**
**F-54000 Nancy (FR)**
Inventeur: **Bazard, Daniel, Rue de Venezu Malleloy,**
**F-54670 Custines (FR)**
Inventeur: **Flayeux, Roland, 1, Boulevard Clémenceau,**
**F-54500 Vandoeuvre (FR)**
Inventeur: **1,Allée Chaptal Richardmenil, 1, Allée Chaptal Richarmenil, F-54630 Flavigny S/Moselle (FR)**
Inventeur: **Niclause, Michel, 37, Rue Eugène Corbin,**
**F-54000 Nancy (FR)**
Inventeur: **Viriot, Marie-Laure née Villaume,**
**85, Boulevard Jean Jaurès, F-54000 Nancy (FR)**

(74) Mandataire: **Ores, Irène et al, CABINET ORES 6, Avenue de Messine, F-75008 - Paris (FR)**

ACTORUM AG

## Nouveau procédé de valorisation des matières amérés du houblon par phototransformation et appareillage pour la mise en œuvre de ce procédé

La présente invention est relative à un nouveau procédé de valorisation des matières amères du houblon par phototransformation et à un appareillage pour la mise en œuvre de ce procédé.

Comme on le sait, les résines extraites des cônes du houblon confèrent son amertume à la bière. De tels extraits sont habituellement introduits dans le moût avant la phase de fermentation de la bière. Il a été trouvé que les composés organiques extraits des cônes de houblon qui présentent des propriétés amérisantes conduisant à l'amertume de la bière, sont essentiellement des acides $\alpha$ et, dans une moindre mesure, des acides $\beta$. En effet, au cours de la fabrication de la bière, pendant la cuisson du moût, les acides $\alpha$ s'isomérisent en acides iso-$\alpha$ qui sont les produits au pouvoir amérisant le plus important. Par contre, les acides $\beta$ ne subissent pas de transformation notable, dans les mêmes conditions, susceptible de donner lieu à des produits possédant des propriétés amérisantes. Cependant, les Inventeurs ont pu établir au cours de travaux antérieurs qu'il est possible de transformer photochimiquement les acides $\beta$ en acide désoxy-$\alpha$ qui sont eux-mêmes facilement oxydables en acides $\alpha$ susceptibles d'être isomérisés en acides iso-$\alpha$ comme il vient d'être décrit, permettant ainsi une meilleure valorisation des résines extraites des cônes du houblon.

Il s'est toutefois avéré dans la pratique que la part des acides $\alpha$ effectivement transformée en acides iso-$\alpha$ pendant la cuisson du moût est très faible. C'est la raison pour laquelle certains travaux dont il a été rendu compte dans l'Art antérieur ont porté sur l'extraction des acides $\alpha$ et $\beta$ des cônes du houblon, les acides $\alpha$ extraits directement ou obtenus par traitement des acides $\beta$ étant ensuite isomérisés en acides iso-$\alpha$. Parmi les procédés d'isomérisation proposés, il y a lieu de citer les procédés par catalyse chimique en présence de sels de magnésium. Il a été constaté que l'addition de tels extraits isomérisés par catalyse chimique à la fin du procédé de fabrication de la bière, avant la fin de la filtration, augmente le rendement de houblonnage jusqu'à 60 et même 75% (alors qu'il n'est que de 30–35% dans le cas d'isomérisation naturelle par ébullition, lors de la cuisson du moût). L'utilisation de ces extraits isomérisés par catalyse chimique n'est cependant pas admise par certaines législations nationales car ils sont susceptibles de contenir des traces de catalyseur ou de solvant dont la présence est prohibée par ces législations. Pour pallier cette difficulté, il a été proposé de soumettre les acides $\alpha$, et notamment l'humulone en solution éthanolique, et les acides $\beta$, et notamment la colupulone, également en solution éthanolique, à une photoisomérisation par irradiation par la lumière ultra-violette, en utilisant une lampe à vapeur de mercure dont la raie 365 nm a été sélectionnée à l'aide d'un filtre optique MTO, pour obtenir respectivement l'isohumulone qui présente les propriétés amérisantes de la bière recherchées et la désoxy-cohumulone qui est aisément transformée par oxydation à l'aide d'un peracide, à la température ambiante, en humulone que l'on peut alors isomériser. Ce type de photoirradiation donne des résultats plus satisfaisants que la technique utilisant une lampe à filament de tungstène décrite par Clarke et Hildebrand [J. Inst. Brewing 71, 26 (1965)] qui avaient précédemment décrit, avec Murray dans J. Inst. Brewing 67, 52 (1961), l'isomérisation de l'humulone en isohumulone sous l'action de la lumière du jour, une telle isomérisation étant citée à titre documentaire car inutilisable en raison de ses rendements très réduits (de l'ordre de 10 à 30 g/m² de capteur et par jour) dus à la dilution de l'énergie solaire.

L'étude des rendements quantiques de phototransformation des acides $\alpha$ et des acides $\beta$ a permis d'établir qu'ils sont faibles, ce qui entraîne un coût énergétique de transformation élevé [cf. Viriot, André, Niclause, Bazard, Moll et Flayeux «Brauerei-Rundschau, Jg 90, n° 7, Juillet 1979, p. 167–169 «Amélioration des propriétés amérisantes du houblon – Communication 1: photoréaction des acides alpha» et n° 8, Août 1979, p. 181–184 «Amélioration des propriétés amérisantes du houblon – Communication 2, photoréaction des acides «béta»]. Or une comparaison du spectre d'émission du soleil et des spectres d'absorption des acides $\alpha$ et $\beta$ fait apparaître un recouvrement partiel de ces spectres, ce qui pourrait permettre d'envisager l'utilisation de la lumière solaire pour phototransformer les acides $\alpha$ et les acides $\beta$, si l'énergie solaire disponible naturellement et gratuitement (contrairement à l'énergie électrique utilisée dans les phototransformations décrites dans l'Art antérieur) n'était pas aussi diluée.

La présente invention s'est en conséquence donné pour but de pourvoir à un procédé de valorisation des matières amères du houblon par phototransformation à l'aide d'énergie solaire absorbée par un capteur conçu de façon appropriée pour pouvoir effectuer de telles photoréactions avec un rendement satisfaisant; elle a également pour but de pourvoir à un capteur pour l'absorption de l'énergie solaire et la réalisation de réactions de phototransformation des acides $\alpha$ et $\beta$ contenus dans les extraits de houblon, avec des rendements satisfaisants.

La présente invention a pour objet un procédé de valorisation des acides $\alpha$ et $\beta$ pratiquement purs obtenus à partir d'un extrait de houblon hautement purifié, notamment par traitement par l'anhydride carbonique liquide, les acides $\alpha$ et $\beta$ obtenus étant, le cas échéant, séparés par chromatographie sur colonne de silice ou de résines échangeuses d'ions comportant des groupes hydroxyle, puis soumis à une phototransformation par la lumière solaire, lequel procédé est caractérisé en ce que ladite phototransformation est réalisée par filtration de la lumière solaire dans la longueur d'onde comprise entre 300 et 400 nm, par concentration du rayonnement solaire à l'aide d'un capteur approprié, pour obtenir une intensité lumineuse au moins égale à $I_a$ = $9,6 \times 10^{-5}$ kilowatts/litre et en maintenant la réaction de photoisomérisation à une température sensiblement constante, voisine de 60°C, de manière à obtenir un rendement quantique optimal.

Selon un mode de réalisation avantageux du procédé objet de l'invention, la réaction de phototransformation – ou photoisomérisation – est maintenue à une température sensiblement constante par couplage dudit photoréacteur avec un capteur thermique.

Conformément à l'invention, la phototransformation des acides $\alpha$ et/ou $\beta$ est réalisée en phase solide.

Selon un autre mode de réalisation du procédé objet de la présente invention, la phototransformation des acides $\alpha$ et/ou $\beta$ est réalisée en phase liquide.

Conformément à ce mode de réalisation, les acides $\alpha$ et/ou $\beta$ phototransformés sont, préalablement à leur introduction dans le photoréacteur, mis en solution dans un alcool tel que l'éthanol, le t-butanol, le méthanol, l'isopropanol, la concentration des acides $\alpha$ dans l'alcool étant de l'ordre de 0,1 mole/litre (soit sensiblement 30 g/litre).

Egalement conformément à l'invention, les solutions alcooliques d'acides $\alpha$ et/ou $\beta$ sont, préalablement à la photolyse, débarrassées de l'obygène dissous, par dégazage par bullage de $CO_2$.

Selon une autre modalité avantageuse de ce mode de réalisation, une fois la phototransformation réalisée, l'alcool est éliminé par distillation.

Selon un mode de réalisation avantageux de l'invention, l'on réalise simultanément la phototransformation des acides $\alpha$ et des acides $\beta$ au moyen de deux photoréacteurs associés par superposition, la phototransformation des acides $\alpha$ ayant lieu dans le photoréacteur inférieur.

Selon une disposition avantageuse de ce mode de réalisation, les solutions d'acides $\alpha$ et d'acides $\beta$ circulent à contre-courant l'une de l'autre dans leurs photoréacteurs respectifs.

La présente invention a également pour objet un capteur de phototransformation essentiellement constitué par au moins un photoréacteur pour la réalisation de la phototransformation des acides $\alpha$ et/ou $\beta$ en acides iso-$\alpha$ et/ou desoxy-$\alpha$, couplé à au moins un capteur thermique.

Conformément à l'invention, un tel capteur peut avantageusement être constitué par un capteur plan, qui comprend un absorbeur porté par un matériau isolant arrière qui délimite avec une vitre transparente au flux solaire visible et opaque au rayonnement infra-rouge de grande longueur d'onde ($\lambda \geq 2,5\ \mu m$) disposée à un intervalle déterminé dudit absorbeur, un photoréacteur, lequel contient les acides $\alpha$ et/ou $\beta$ à phototransformer, sous forme solide ou en solution alcoolique, une vitre de protection étant éventuellement superposée à la vitre constituant la paroi du photoréacteur, à un intervalle déterminé de cette dernière.

Selon une modalité avantageuse de l'invention, la vitre de protection de la vitre constituant la paroi du photoréacteur est également transparente au flux solaire visible et opaque au rayonnement infra-rouge de grande longueur d'onde ($\lambda \geq 2,5\ \mu m$).

Selon un autre mode de réalisation avantageux dudit capteur plan, celui-ci est constitué par le couplage de deux photoréacteurs plans superposés qui évitent les pertes d'absorption de la lumière, le premier photoréacteur étant délimité par l'absorbeur sur sa face arrière et par une vitre telle que définie plus haut sur sa face avant, et le second photoréacteur étant délimité par cette dernière vitre, et par une deuxième vitre qui lui est superposée à un intervalle déterminé, pour constituer la paroi du deuxième photoréacteur plan, une vitre de protection extérieure étant éventuellement, en outre, placée à un intervalle déterminé de ladite deuxième vitre.

Conformément à l'invention, le capteur plan est pourvu de moyens de régulation de la température à l'intérieur du ou des photoréacteur(s).

Selon une modalité avantageuse de ce mode de réalisation, lesdits moyens de régulation de la température sont constitués par ladite vitre de protection.

Selon une autre modalité de l'invention, ces moyens sont constitués par une pluralité de lames orientables dont la position est commandée par un capteur de température, lesquelles sont interposées entre l'isolant et l'absorbeur.

Selon encore une autre modalité de l'invention, ces moyens sont constitués par une ventilation forcée interposée entre le matériau isolant arrière et l'absorbeur, laquelle ventilation forcée est assurée par une structure métallique creuse dans laquelle on fait circuler de l'air à un débit approprié et à la température extérieure, pour assurer le refroidissement du capteur, cette structure servant, en outre, de support à l'absorbeur.

Selon une autre modalité de l'invention, ces moyens sont constitués par un réseau tubulaire de circulation d'un liquide réfrigérant ou chauffant interposé entre l'isolant et l'absorbeur, et dans lequel le liquide réfrigérant ou chauffant circule suivant un débit régulé par tous moyens appropriés et notamment à l'aide d'une électrovanne.

Selon encore une autre modalité de l'invention, l'épaisseur du ou d'un photoréacteur du capteur est comprise entre 0,13 et 1 cm environ et est choisie de manière à assurer une absorption maximale des photons utiles à la photolyse des acides $\alpha$ et/ou $\beta$ en fonction de la durée de séjour des acides $\alpha$ et/ou $\beta$ dans le photoréacteur.

Selon un mode de réalisation avantageux de l'invention, le capteur plan conforme à l'invention, est équipé d'un dispositif de suivi de la réaction de phototransformation qui réalise la mesure de la réaction de phototransformation in situ par spectrométrie et qui est avantageusement constitué, en combinaison, par un filtre neutre de den-

sité optique $D_o$ mesurable à la longueur d'onde d'analyse, qui est comprise entre 400 et 420 nm, et choisie en fonction de l'épaisseur du ou de l'un des photoréacteur(s) (par exemple $D_o$ = 0,465 pour une longueur d'onde de 410 nm et une épaisseur du photoréacteur de 2 mm) lequel filtre neutre est associé au ou à un des photoréacteur(s), un filtre interférentiel pour la valeur moyenne de 410 nm, une photopile de référence et une photopile de mesure.

Selon une disposition avantageuse de ce mode de réalisation, le filtre neutre est avantageusement réalisé en un verre légèrement absorbant.

Selon une modalité particulière de réalisation du capteur plan conforme à l'invention, appliqué à la phototransformation d'acides $\alpha$ et/ou $\beta$ en solution alcoolique, celui-ci est constitué par une pluralité de réacteurs individuels montés en série et/ou en parallèle dans lesquels circule successivement une solution alcoolique d'acides $\alpha$ et/ou $\beta$ à concentrations croissantes du photoréacteur d'entrée au photoréacteur de sortie, un tel agencement permettant le fonctionnement du capteur de phototransformation en continu.

Selon une autre modalité particulière de réalisation du capteur conforme à l'invention, appliqué à la phototransformation d'acides $\alpha$ et/ou $\beta$ en solution alcoolique, celui-ci est constitué par une pluralité de réacteurs individuels montés en série et/ou en parallèle dans lesquels circule successivement une solution alcoolique d'acides $\alpha$ et/ou $\beta$ de même concentration, un tel agencement fonctionnant en discontinu.

Conformément à l'invention, le capteur plan est fixe, ou bien sa position peut être modifiée mensuellement ou de façon hebdomadaire, par manipulation, pour assurer sa disposition perpendiculairement à la direction du soleil, ou bien encore il peut être monté dans une monture assurant le suivi permanent du soleil, de type connu en lui-même.

Selon un mode de réalisation avantageux du capteur conforme à la présente invention, celui-ci comprend, en combinaison, au moins un photoréacteur associé à un capteur thermique qui déclenche la régulation thermique du photoréacteur.

Selon une disposition avantageuse de ce mode de réalisation, le capteur thermique est constitué par un absorbeur comportant une tôle noire sur laquelle sont soudées des ailettes de refroidissement par ventilation.

Selon une autre disposition avantageuse de ce mode de réalisation, pour son application à la phototransformation d'acides $\alpha$ et/ou $\beta$ en solution alcoolique, un dispositif de sécurité comportant une électrovanne à ouverture rapide pour la vidange de l'alcool ou une plaque-rideau opaque de limitation du flux de photons dans le(s) photoréacteur(s), est associé à ce(s) dernier(s) pour empêcher une élévation de température dans le photoréacteur en cas de non-fonctionnement du capteur de régulation thermique.

Selon une modalité avantageuse de l'invention, le capteur est équipé de soupapes de sécurité associées à au moins un photoréacteur pour éviter les surpressions dans ce dernier pouvant endommager les vitres.

Selon un mode de réalisation avantageux dudit capteur plan, pour son application à la phototransformation d'acides $\alpha$ et/ou $\beta$ en solution alcoolique, celui-ci est constitué par un capteur à distillation permettant la distillation de l'alcool une fois la phototransformation réalisée.

Selon un mode de réalisation avantageux du capteur, celui-ci comprend un capteur de forme telle que le rayonnement solaire capté sur une surface soit dévié par un moyen approprié sur une autre surface, plus petite, sur laquelle se produit la phototransformation recherchée, cette forme étant de préférence celle d'un paraboloïde de révolution ou une forme cylindro-parabolique, qui constitue un capteur thermique, lequel est associé à un photoréacteur plan solidaire dudit capteur thermique, un tel montage permettant d'augmenter de façon considérable l'intensité lumineuse concentrée dans le capteur, (jusqu'à 100 fois et plus), par rapport à l'utilisation d'un capteur plan seul.

Selon un mode de réalisation avantageux du capteur thermique conforme à l'invention, celui-ci est réalisé en verre comportant une couche métallique réflectrice en avant du verre, laquelle couche métallique est protégée par une couche de silice vaporisée sur le miroir, le verre et la mince couche de silice absorbant la majeure partie des rayonnements infra-rouges.

Selon une autre modalité avantageuse de ce mode de réalisation, le photoréacteur plan solidaire du capteur thermique, est du type à simple vitrage ou double vitrage définis dans ce qui précède.

Selon encore une autre modalité avantageuse de ce mode de réalisation, la régulation de la température du photoréacteur est réalisée à l'aide de dispositifs de régulation à ailettes de refroidissement, à circulation forcée d'air ou à liquide de régulation de température définis plus haut, en relation avec le capteur plan.

Selon une autre modalité de ce mode de réalisation, la régulation de température dans le photoréacteur plan est assurée par un dispositif de chauffage partiel de ce dernier, notamment par circulation d'un fluide chauffant.

Selon un mode de réalisation avantageux du photoréacteur plan, celui-ci est essentiellement formé de deux réacteurs superposés, couplés, fonctionnant à contre-courant, dont l'épaisseur est de l'ordre de 20 mm pour une épaisseur de vitre de l'ordre de 15 mm.

Selon une disposition avantageuse de ce mode de réalisation, le couplage desdits deux réacteurs fonctionnant à contre-courant, constitue un photoréacteur mixte de phototransformation simultanée des acides $\alpha$ et $\beta$ séparés, présents respectivement dans les deux compartiments du photoréacteur, ou un photoréacteur pour la phototransformation des acides $\alpha$ ou des acides $\beta$ uniquement, par circulation de ceux-ci successivement dans les deux compartiments du photoréacteur.

Selon une autre disposition avantageuse de ce mode de réalisation, le photoréacteur plan est équipé d'un dispositif de suivi des concentrations en acides $\alpha$ et $\beta$, du type de celui défini en relation avec le capteur plan non associé à un capteur thermique de concentration de l'énergie solaire.

Selon encore une autre disposition avantageuse de ce mode de réalisation, le photoréacteur plan est équipé d'électrovannes de commande de la circulation des solutions d'acides $\alpha$ et $\beta$ vers les photoréacteurs et hors de ceux-ci en vue de la récupération des acides iso-$\alpha$ et/ou désoxy-$\alpha$ obtenus par phototransformation.

Selon un mode de réalisation avantageux du photoréacteur plan solidaire du concentrateur paraboloïdal ou cylindro-parabolique, la photo-transformation des acides $\alpha$ est réalisée dans le réacteur inférieur et la phototransformation des acides $\beta$ est réalisée dans le réacteur supérieur.

Selon une disposition avantageuse de ce mode de réalisation, la circulation de la solution d'acides $\beta$ à phototransformation dans le réacteur supérieur se fait en pseudo-contre-courant, en continu ou en discontinu, et la phototransformation de la solution d'acides $\alpha$ dans le réacteur inférieur est réalisée en discontinu avec interposition d'un réservoir-tampon associé à une pompe de circulation à l'aide de laquelle des charges appropriées sont introduites en discontinu dans ledit réacteur inférieur, suivant une cadence prédéterminée.

La présente invention a également pour objet une installation pour la phototransformation des acides $\alpha$ et/ou $\beta$, caractérisée en ce qu'elle comprend, en combinaison: – un concentrateur de forme paraboloïdale ou cylindro-parabolique tel que défini dans ce qui précède; – une première série de photoréacteurs inférieurs plans montés en série; – une deuxième série de photoréacteurs supérieurs plans montés en série; – au moins un réservoir-tampon associé à une pompe de circulation pour l'introduction de charges prédéterminées d'acides à phototransformer dans la première et/ou la deuxième séries de photoréacteurs; – au moins un bac de collecte pour la récu-pération des acides iso-$\alpha$ et/ou des acides dés-oxy-$\alpha$ obtenus par phototransformation.

Selon un mode de réalisation avantageux de cette installation, celle-ci comprend, en combinaison: – un concentrateur de forme paraboloïdale ou cylindro-parabolique tel que défini dans ce qui précède; – une première série de photoréacteurs inférieurs plans montés en série; – une deuxième série de photoréacteurs supérieurs plans montés en série; – au moins un bac de mise en solution des acides à phototransformer dans de l'alcool; – au moins un dispositif de dégazage de l'oxygène dissous dans la ou les solution(s) d'acides à phototransformer, par bullage de $CO_2$; – au moins un réservoir-tampon associé à une pompe de circulation pour l'introduction de charges prédéterminées dans la première et/ou la deuxième séries de photoréacteurs; – au moins un bac de collecte des solutions phototransformées; – au moins une colonne de distillation de l'alcool des solutions phototransformées; – au moins une conduite de recyclage de l'alcool distillé dans le bac correspondant de mise en solution; – des moyens de récupération des acides iso-$\alpha$ et/ou des acides désoxy-$\alpha$ obtenus par photo-transformation.

Selon un mode de réalisation avantageux de ladite installation prévu pour la phototransforma-tion des acides $\alpha$ seulement, celle-ci comprend, en combinaison avec un concentrateur paraboloïdal ou cylindro-parabolique: – un bac de mise en solution des acides $\alpha$ introduits dans ledit bac dans de l'alcool à raison de 30 g/litre environ; – un bac d'élimination de l'oxygène dissous dans la solution; – un réservoir de stockage de la solution dégazée; – un réservoir-tampon associé à au moins une pompe de circulation; – une première série de photoréacteurs inférieurs plans montés en série; – une deuxième série de photoréacteurs supérieurs plans montés en série; – au moins une canalisation de raccordement du réservoir-tampon avec la première série de photoréacteurs et au moins une canalisation de raccordement du réservoir-tampon avec la deuxième série de photoréacteurs; – un réservoir collecteur des solutions phototransformées à leur sortie des photoréacteurs; – une colonne de distillation de l'alcool des solutions phototransformées collectées; – une canalisation de recyclage de l'alcool séparé par distillation, dans le bac de mise en solution, – et des moyens de récupération des acides iso-$\alpha$ à la sortie de la colonne de distillation.

Selon un mode de réalisation avantageux de ladite installation prévu pour la phototransforma-tion des acides $\alpha$ seulement, celle-ci comprend, en combinaison avec un concentrateur paraboloïdal ou cylindro-parabolique tel que défini dans ce qui précède; – un bac de mise en solution des acides $\beta$ dans de l'alcool, à raison de 30 g/litre; – un bac d'élimination de l'oxygène dissous dans la solution; – un réservoir de stockage de la solution dégazée: – un réservoir-tampon associé à au moins une pompe de circulation, et pourvu de moyens complémentaires d'élimination de l'oxygène dissous dans la solution, tels que bullage de $CO_2$ notamment; – une première série de photoréacteurs inférieurs plan montés en série; – une deuxième série de photoréacteurs supérieurs plans montés en série; – au moins une canalisation de raccordement du réservoir-tampon avec la première série de photoréacteurs et au moins une canalisation de raccordement du réservoir-tampon avec la deuxième série de photoréacteurs; – un réservoir de collecte des solutions phototransformées à leur sortie des photoréacteurs; – une colonne de distillation de l'alcool des solutions phototransformées collectées; – une canalisation de recyclage de l'alcool séparé par distillation, dans le bac de mise en solution, – et des moyens de récupération des acides désoxy-$\alpha$ à la sortie de la colonne de distillation.

Selon un mode de réalisation avantageux de ladite installation prévu pour la phototransforma-

tion des acides β seulement, celle-ci comprend, en combinaison avec un concentrateur paraboloïdal ou cylindro-parabolique tel que défini dans ce qui précède: – un bac de mise en solution des acides β dans de l'alcool, à raison de 30 g/litre; – un bac d'élimination de l'oxygène dissous dans la solution; – un réservoir de stockage de la solution dégazée; – un réservoir-tampon associé à au moins une pompe de circulation, et pourvu de moyens complémentaires d'élimination de l'oxygène dissous dans la solution, tels que bullage de $CO_2$ notamment; – une première série de photoréacteurs inférieurs plans montés en série; – une deuxième série de photoréacteurs supérieurs plans montés en série; – au moins une canalisation de raccordement du réservoir-tampon avec la première série de photoréacteurs et au moins une canalisation de raccordement du réservoir-tampon avec la deuxième série de photoréacteurs; – un réservoir de collecte des solutions phototransformées à leur sortie des photoréacteurs; – une colonne de distillation de l'alcool des solutions phototransformées collectées; – une canalisation de recyclage de l'alcool séparé par distillation, dans le bac de mise en solution, – et des moyens de récupération des acides désoxy-α à la sortie de la colonne de distillation.

Selon un autre mode de réalisation avantageux de ladite installation prévu pour la phototransformation simultanée des acides α et β préalablement séparés à partir d'un extrait de houblon hautement purifié, celle-ci comprend en combinaison avec un concentrateur paraboloïdal ou cylindro-parabolique, tel que défini dans ce qui précède: – un bac de mise en solutions des acides α dans de l'alcool à raison de 30 g/litre; – un bac de mise en solution des acides β dans de l'alcool à raison de 30 g/litre; – un bac d'élimination de l'$O_2$ dissous dans la solution alcoolique d'acides α; – un bac d'élimination de l'$O_2$ dissous dans la solution alcoolique d'acides β; – un réservoir de stockage de la solution alcoolique d'acides α; – un réservoir de stockage de la solution alcoolique d'acides β; – au moins un réservoir-tampon relié au réservoir de stockage de la solution alcoolique d'acides α et associé à au moins une pompe de circulation pour l'introduction de ladite solution dans une première série de photoréacteurs inférieurs plans montés en série; – un réservoir-tampon relié au réservoir de stockage de la solution alcoolique d'acides β, pourvu de moyens complémentaires d'élimination de l'$O_2$ encore dissous dans ladite solution, et associé à au moins une pompe de circulation pour l'introduction de ladite solution dans une deuxième série de photoréacteurs supérieurs plans; – un réservoir de collecte des solutions alcooliques d'acides iso-α obtenus par phototransformation à la sortie de la première série de photoréacteurs; – un réservoir de collecte des solutions alcooliques d'acides désoxy-α obtenus par phototransformation, à la sortie de la deuxième série de photoréacteurs; – une première colonne de séparation par distillation de l'alcool des solutions phototransformées d'acides iso-α; – une deuxième colonne de séparation par distillation de l'alcool des solutions phototransformées d'acides désoxy-α; – une canalisation de recyclage de l'alcool séparé dans la première colonne de distillation, dans le bac de mise en solution alcoolique des acides α; – une canalisation de recyclage de l'alcool séparé dans la deuxième colonne de distillation, dans le bac de mise en solution alcoolique des acides β; – des moyens de récupération des acides iso-α à leur sortie de la première colonne; – et des moyens de récupération des acides désoxy-α à leur sortie de la deuxième colonne.

Selon une modalité avantageuse de l'invention, le concentrateur paraboloïdal ou cylindro-parabolique auquel sont solidarisés les photoréacteurs, est pourvu d'un dispositif assurant son orientation constante en fonction de la position du soleil, connu en lui-même; ce dispositif peut être:

– soit une monture correspondant au système de coordonnées horizontales habituellement retenu pour repérer la position apparente du soleil, mobile autour de deux axes, l'un vertical (mouvement en azimut), l'autre horizontal (mouvement en hauteur ou en site);
– soit une monture correspondant au système de coordonnées équatoriales habituellement retenu pour repérer la position apparente du soleil, qui tourne autour d'un axe parallèle à l'axe du monde (mouvement en angle horaire) et autour d'un axe orthogonal au précédent (mouvement en déclinaison);
– soit, dans le cas d'un capteur cylindro-parabolique dont l'axe principal est orienté est/ouest, un entraînement du capteur en rotation autour de l'axe est/ouest;
– soit une monture du type dit «capteur sphérique enterré»,
– soit tout autre système approprié de suivi du soleil.

Selon un mode de réalisation avantageux de l'invention, le capteur, qu'il s'agisse d'un capteur plan ou d'un capteur paraboloïdal ou cylindro-parabolique constitué par un photoréacteur plan associé à un concentrateur, est couplé avec des moyens de récupération de l'énergie thermique induite par le rayonnement solaire incident absorbé par le capteur et non utilisé pour la phototransformation, et avec des installations, notamment industrielles, d'utilisation de ladite chaleur concentrée pour diverses applications thermiques.

Outre les dispositions qui précèdent, l'invention comprend encore d'autres dispositions, qui ressortiront de la description qui va suivre.

La présente invention vise plus particulièrement les procédés et les appareillages de valorisation des matières amères du houblon, par phototransformation, conformes aux dispositions qui précèdent, ainsi que les moyens propres à leur mise en œuvre et à leur réalisation et les procédés et installations d'ensemble incluant lesdits procédés et appareillages.

L'invention sera mieux comprise à l'aide du complément de description qui va suivre, qui se réfère aux dessins annexés dans lesquels:

- la fig. 1 est une représentation schématique d'un capteur plan conforme à la présente invention;
- la fig. 2 représente un schéma de fonctionnement d'un capteur plan;
- les fig. 3 et 4 représentent schématiquement, respectivement deux modes de réalisation du capteur plan conforme à la présente invention;
- les fig. 5 et 6 représentent schématiquement des capteurs plans équipés de dispositifs de régulation de la température dans le capteur;
- la fig. 7 est une représentation schématique d'un autre mode de réalisation d'un capteur plan conforme à l'invention;
- la fig. 8 est un schéma représentant un mode de réalisation d'un capteur plan conforme à l'invention, comportant une pluralité de photoréacteurs montés en série convenant à un fonctionnement en continu;
- la fig. 9 est une représentation schématique d'un capteur plan conforme à l'invention, comportant des moyens de suivi de la réaction de phototransformation;
- les fig. 10 et 11 représentent schématiquement un mode de réalisation d'un capteur plan conforme à l'invention, comprenant un photoréacteur associé à un capteur thermique;
- la fig. 12 représente un schéma d'une installation de phototransformation comportant un capteur plan conforme à l'invention;
- les fig. 13 et 14 sont des schémas de réalisation d'une phototransformation simultanée des acides $\alpha$ et $\beta$ dans un photoréacteur mixte et de réalisation de la photolyse des acides $\beta$ seuls dans le même photoréacteur, dont
- la fig. 15 représente le schéma de fonctionnement;
- la fig. 16 représente un schéma d'un photoréacteur de phototransformation simultanée des acides $\alpha$ et $\beta$, pouvant également photolyser les acides $\beta$ seuls, prévu pour être associé à un concentrateur paraboloïdal ou cylindro-parabolique;
- la fig. 17 représente schématiquement des moyens de régulation de la température dans le photoréacteur de la fig. 16;
- la fig. 18 représente schématiquement un capteur thermique de concentration de l'énergie solaire, de forme cylindro-parabolique, avec son photoréacteur plan associé;
- la fig. 19 représente schématiquement un capteur de concentration de l'énergie solaire, de forme parabolique, avec son photoréacteur plan associé;
- la fig. 20 représente une variante de réalisation du capteur de la fig. 17;
- la fig. 21 représente schématiquement un miroir de concentration de l'énergie solaire à couche de reflexion métallique appliquée en avant du matériau constitutif du miroir;
- les fig. 22 à 24 représentent de façon schématique des installations de phototransformation des acides $\alpha$ seuls, de phototransformation simultanée des acides $\alpha$ et des acides $\beta$ et de phototransformation des acides $\beta$ seuls, respectivement, et
- les fig. 25 à 27 représentent schématiquement différents modes de réalisation, connus en eux-mêmes, de montures de suivi du soleil des capteurs selon les fig. 18 à 20.

Il doit être bien entendu, toutefois, que ces dessins et les parties descriptives correspondantes, sont donnés uniquement à titre d'illustration de l'objet de l'invention, dont ils ne constituent en aucune manière une limitation.

Bien que les exemples de réalisation décrits et représentés aux dessins se réfèrent à des installations pour la phototransformation d'acides $\alpha$ et/ou $\beta$ en solution alcoolique, l'on comprendra aisément qu'une simple adaptation de ces installations permet la phototransformation d'acides $\alpha$ et/ou $\beta$ en acides iso-$\alpha$ et/ou en acides désoxy-$\alpha$ sous forme solide.

Le recours à l'énergie solaire pour effectuer la phototransformation des acides $\alpha$ et des acides $\beta$ respectivement en acides iso-$\alpha$ et en acides désoxy-$\alpha$ eux-mêmes transformables en acides $\alpha$, constitue un moyen d'obtenir lesdites transformations sans avoir recours à des moyens chimiques prohibés par un grand nombre de législations nationales, et également un moyen d'utiliser une source d'énergie peu onéreuse susceptible de se substituer avantageusement aux sources d'énergie classiques de plus en plus onéreuses. La phototransformation des acides $\alpha$ et $\beta$ en utilisant l'énergie solaire est rendue économiquement rentable grâce à la mise au point, conformément à la présente invention, de capteurs présentant des caractéristiques appropriées.

Les capteurs solaires mis au point dans le cadre de la présente invention, appartiennent à deux catégories connues, à savoir:

- les collecteurs plans, le plus souvent fixes, d'orientation et d'inclinaison déterminées;
- les collecteurs à concentration, mobiles et constamment orientés vers le soleil.

Les capteurs solaires du premier type utilisent aussi bien le rayonnement direct issu du soleil que le rayonnement diffus provenant du ciel, des nuages, du sol; s'il s'agit d'un capteur thermique, les influences des paramètres climatiques habituels doivent être prises en compte: température de l'air, vitesse et turbulence du vent, rayonnement terrestre de l'atmosphère, alors que ces influences sont presque négligeables s'il s'agit d'un capteur photochimique plus sensible à la répartition spectrale du rayonnement incident.

Dans les capteurs solaires du deuxième type, seul intervient le rayonnement direct du soleil, principalement lié à la hauteur angulaire du soleil, au trouble atmosphérique et à la durée d'ensoleillement, sans qu'il doive être pratiquement tenu compte des autres éléments climatiques tels que ceux qui viennent d'être énumérés ci-dessus.

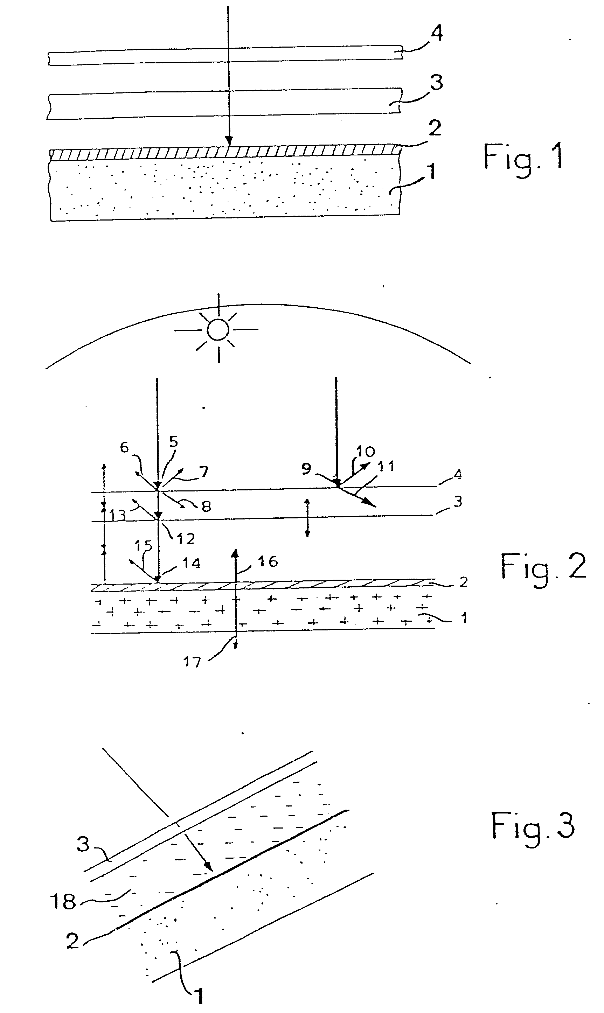

Le capteur plan représenté à la fig. 1 comporte un socle en matériau isolant 1 dont la face supérieure porte un absorbeur 2, un vitrage intermédiaire 3, et un vitrage de protection 4.

L'absorbeur 2, avantageusement constitué par une plaque noircie, transforme le rayonnement solaire en chaleur, les vitrages 3 et 4 sont en verre transparent au flux solaire visible, opaque à l'infra-rouge de grande longueur d'onde ($\lambda \geq 2,5\ \mu m$).

La fig. 2 présente le schéma de fonctionnement d'un tel capteur plan: soit $\Phi_u$ la composante normale «utile» du rayonnement solaire (domaine spectral limité à la bande de transmission de la vitre de protection 4) et $\Phi_{ir}$, la composante normale du rayonnement incident situé au-delà de la longueur d'onde de coupure de la vitre de protection 4.

Au niveau de l'intersection 5 du rayonnement solaire utile $\Phi_u$ avec la vitre de protection 4, il se produira d'une part une réflexion 6 et d'autre part une émission et une réflexion des IR (flèches 7 et 8). Au niveau de l'intersection 9 du rayonnement incident $\Phi_{ir}$ avec la vitre de protection 4 il se produira une émission et une réflexion des IR (flèches 10 et 11). Au niveau de l'intersection 12 du rayonnement $\Phi_u$ avec la vitre intermédiaire 3 il se produira une réflexion 13 de même qu'au niveau de l'intersection 14 du rayonnement $\Phi_u$ avec l'absorbeur 2 (flèche 15) à partir duquel se produiront une émission et une réflexion des IR (flèche 16), ainsi que des pertes par conduction à travers le matériau isolant (flèche 17).

A titre d'exemples non limitatifs, les caractéristiques du capteur plan représenté aux fig. 1 et 2 peuvent avantageusement être les suivantes:

| Vitres: | | |
|---|---|---|
| – facteur de réflexion | | – 2 = 0,08 |
| – facteur d'absorption pour le rayonnement solaire | | – α = 0,04 |
| – facteur d'émission et d'absorption IR | | – ε = 0,9 |
| Intervalles: | | |
| – entre l'absorbeur 2 et la vitre intermédiaire 3: | 0,04 m | pour un capteur à |
| – entre la vitre intermédiaire 3 et la vitre de protection 4: | 0,02 m | deux vitres |
| – entre l'absorbeur et la vitre 3: | 0,04 m | pour un capteur à une seule vitre |
| Inclinaison du capteur par rapport à l'horizontale: | 30° | |
| Absorbeur: | | |
| – absorbeur noir: | α = 0,95 | ε = 0,95 |
| – absorbeur sélectif: | α = 0,95 | ε = 0,15 |
| Vitesse du vent: | | |
| – $V_{nominal}$: | 2 m/sec. | plage: 0 à 50 m/sec. |
| Isolation arrière: | | |
| – coefficient global d'échange absorbeur/atmosphère vers l'arrière, $K_{AR\ nominal}$ = | 1,4 W/m² °K | |
| plage = | 0,5 à 2,5 W/m² °K | |
| Température avant: | | |
| – température de l'air extérieur au capteur mesurée en face avant　$T_{AV\ nominal}$ = | 300 °K | plage: 270 à 300 °K |
| Température arrière: | | |
| – température de l'air extérieur au capteur mesurée en face arrière　$T_{AR\ nominal}$ = | 300 °K | plage: 270 à 330 °K |
| Flux infra-rouge: | | |
| – rayonnement incident $\Phi$ ir nominal = | 400 W/m² | |
| plage = | 200 à 700 W/m² | |

Dans l'intervalle 18 compris entre l'absorbeur 2 et la vitre 3, on introduit une solution d'acides α ou β purifiés, dans l'alcool, par exemple dans l'éthanol, à raison de sensiblement 30 g/litre (0,1 mole/litre), après l'avoir, dans toute la mesure du possible, débarrassée de l'oxygène dissous par bullage de $CO_2$ par exemple, cette solution étant phototransformée dans le photoréacteur ainsi constitué.

Il a été établi par les Inventeurs que la phototransformation des acides α est optimale à 60°C et que son rendement quantique est alors de 3%. C'est la raison pour laquelle l'utilisation d'un simple absorbeur (sans vitrage) constitué par une plaque de tôle noircie pour la phototransformation des acides α n'est pas envisageable dans les climats tempérés car la température de la plaque ne peut être qu'au plus égale à la température ambiante plus 40 à 50°C; une telle solution n'est pas envisageable non plus avec les solvants al-

cooliques connus des acides $\alpha$, dans les pays à fort ensoleillement en raison de la volatilité de l'alcool qui serait rapidement évaporé.

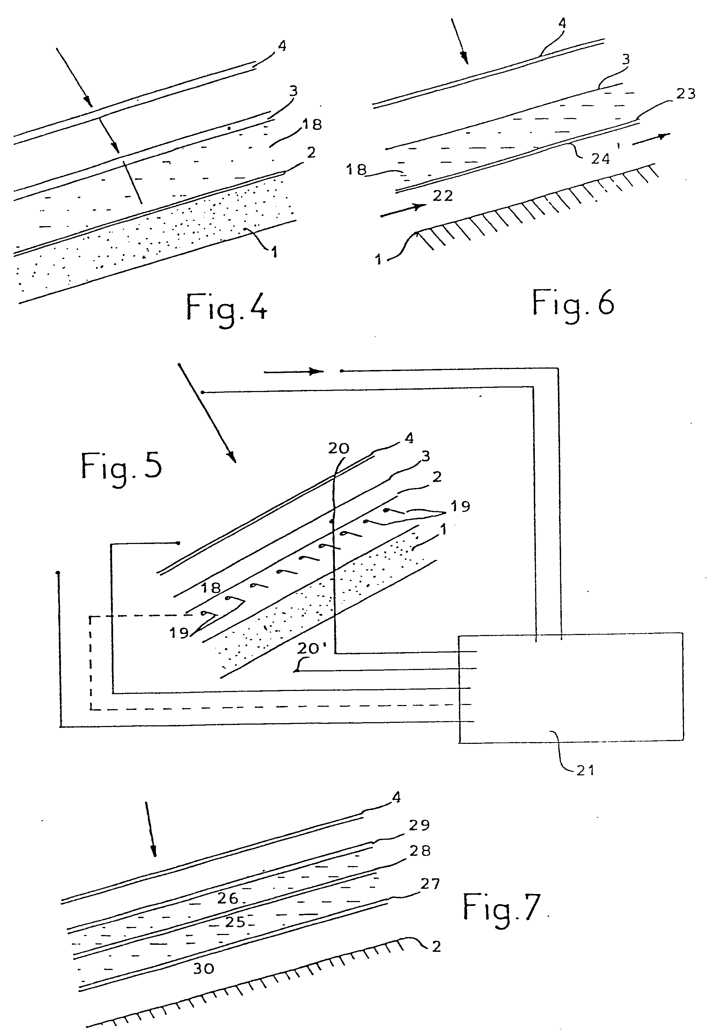

Un capteur du type de celui représenté à la fig. 3, c'est-à-dire un capteur dépourvu de vitre de protection 4 est cependant envisageable dans les pays à fort ensoleillement où la température de 60°C dans le photoréacteur est aisément atteinte (alors qu'elle l'est difficilement dans les pays tempérés). C'est la raison pour laquelle le capteur plan comprenant une vitre de protection 4 et une vitre intermédiaire 3 représenté aux fig. 1 et 4, qui constitue dans la zone 18 contenant la solution d'acides à phototransformer, un photoréacteur chimique, représente la solution optimale en particulier dans les climats tempérés, mais également dans les pays à fort ensoleillement, la mise en place d'un vitrage supérieur 4 permettant d'atteindre sans difficulté, dans les régions tempérées, la température de 60° dans le photoréacteur 18, indépendamment de et quelle que soit la vitesse du vent.

Comme la phototransformation des acides $\alpha$ est optimale vers 60°C, une faible part du flux solaire incident est utilisée pour la réaction photochimique, de l'ordre de 20%; il est donc avantageux de prévoir des moyens de récupération partielle ou totale de ce flux incident non utilisé (environ 80%), en vue de son utilisation dans diverses applications thermiques, et également pour permettre une thermostatation du capteur au voisinage de 60°C en toutes saisons dans les climats tempérés (notamment en élevant la température du capteur photochimique en le transformant en capteur thermique, pour que sa température soit toujours supérieure à la température extérieure.

Dans les régions à fort ensoleillement on peut, au contraire, chercher à limiter la température à l'intérieur du capteur, à l'aide d'une régulation de la température par limitation de l'absorption visible et infra-rouge ou par circulation d'air ou d'eau de refroidissement.

Un système utilisé pour limiter le flux lumineux absorbé est constitué, par exemple (cf. fig. 5) par un jeu de lames orientables 19, montées à l'arrière du photoréacteur 18 entre ce dernier et le socle isolant 1, et dont la position dépend d'un capteur de température 20–20' dont les données sont fournies à un ordinateur 21 qui gère l'installation et commande l'orientation des lamelles 19 en fonction des données fournies par le capteur de température.

La régulation de la température dans le capteur peut également être réalisée en faisant circuler à l'arrière du photoréacteur 18, de l'air dont le débit est adapté en fonction des données fournies par un capteur de température à un ordinateur. Un tel système de régulation est constitué par une ventilation forcée 22 (cf. fig. 6), établie entre la face supérieure du socle isolant 1 et l'absorbeur 23, qui est avantageusement placé sur un support métallique 24 qui assure le refroidissement lorsque la ventilation forcée intervient. Le fonctionnement de la ventilation forcée intervient dès que la température du capteur dépasse un seuil légèrement supérieur à 60°C et s'arrête dès qu'elle est légèrement inférieure à 60°C.

L'épaisseur du réacteur photochimique plan doit être choisie de manière à assurer l'absorption de l'essentiel des photons utiles incidents. Si l'on admet un temps de séjour moyen t d'une semaine comme étant acceptable pour la phototransformation des acides $\alpha$, une épaisseur e de 1 cm du réacteur conduit, pour une solution à 0,1 mole/litre à la fabrication de 13 kg/an/m² (situation de Saint Raphaël). Si l'on admet seulement un jour pour t, e doit être égale à 0,13 cm.

Pour éliminer les pertes d'absorption, il est avantageux de réaliser le capteur plan conforme à l'invention, sous la forme de deux photoréacteurs superposés (cf. fig. 7) 25 et 26 délimités par les vitres 27, 28, 29, et fermés extérieurement par la vitre de protection 4, tandis qu'une zone 30 est prévue entre l'absorbeur 2 et la paroi arrière 27 du premier photoréacteur, 25, pour la régulation de la température du capteur, auquel cas le premier photoréacteur, 25, contient une solution plus fraîche que celle contenue dans le deuxième photoréacteur, 26 (avancement de la réaction inférieur à 0,5 dans le premier photoréacteur et sensiblement inférieur à 0,95 dans le deuxième photoréacteur).

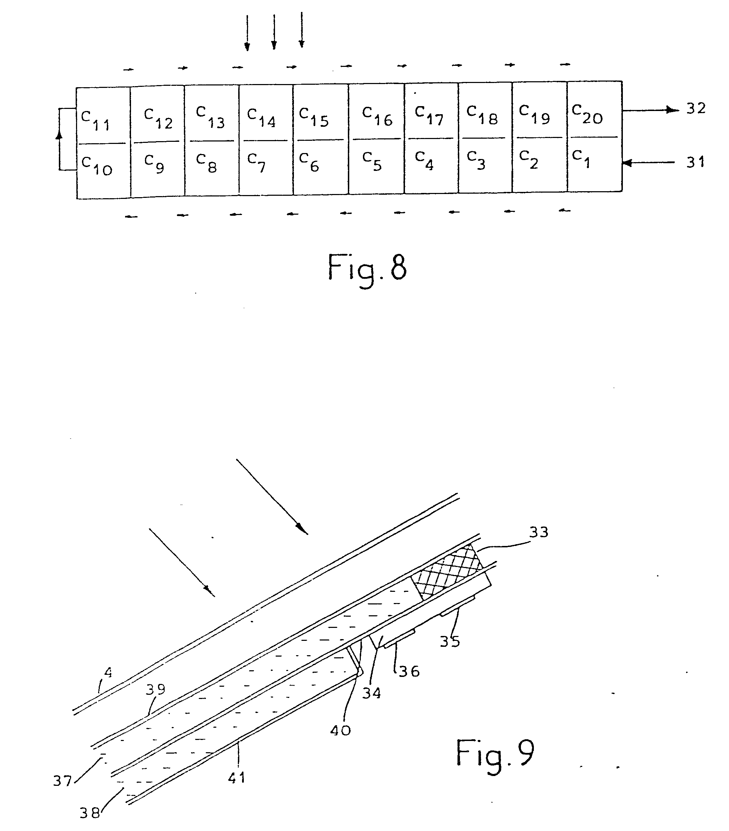

Un réacteur du type de celui représenté à la fig. 7 convient particulièrement bien à un fonctionnement en continu. La fig. 8 donne un exemple d'application à un fonctionnement en continu à l'aide d'un réacteur comportant deux fois dix photoréacteurs individuels dans lesquels circule une solution d'acides, par exemple d'acides $\alpha$ à photolyser, de concentration croissante: la solution fraîche entre en 31, dans le premier photoréacteur à concentration $C_1$ pour passer successivement dans les photoréacteurs à concentration $C_2$ ... $C_{10}$ de la première série de photoréacteurs inférieurs, puis du photoréacteur à concentration $C_{10}$ dans le premier photoréacteur à concentration $C_{11}$ de la série de photoréacteurs inférieurs à concentration $C_{11}$ ... à $C_{20}$ pour sortir du photoréacteur à concentration $C_{20}$ par la sortie 32, la réaction étant pratiquement terminée quand $C_{20} = C/20$ (rendement de transformation – ou avancement – de 0,95) pour une concentration type de 0,1 mole/litre; même pour des épaisseurs e réduites, de l'ordre de 1 à 2 mm, on obtient des résultats moyens satisfaisants, au moins équivalents à la phototransformation de solutions dans un photoréacteur de 1 cm.

Lorsque le photoréacteur représenté à la fig. 8 contient dans toutes ses cellules $C_1$ à $C_{10}$ une solution de concentration identique $\bar{C}_1$ et dans toutes ses cellules $C_{11}$ à $C_{20}$ une solution de concentration identique $\bar{C}_2$, ce photoréacteur fonctionne en discontinu, $\bar{C}_1$ et $\bar{C}_2$ pouvant être identiques ou différents. Les résultats obtenus pour une concentration de 0,1 mole/litre et pour différentes épaisseurs e sont rassemblés dans le tableau 1 ci-après:

Tableau 1

Coefficient multiplicatif à affecter au temps moyen d'irradiation pour atteindre un rendement de transformation de 0,95 (h = 16 km et α = 30°)

| photoréacteur | coefficient | temps de séjour moyen (jours) |
|---|---|---|
| simple épaisseur | | |
| e = 1 cm | 1,155 | 7 |
| e = 2 mm | 1,346 | 1,4 |
| 2 photoréacteurs superposés | | |
| e = 1 mm | 1,309 | 1,4 |
| e = 2 mm | 1,170 | 2,8 |

Si tous les photoréacteurs plans possèdent tous la même orientation et s'ils sont exactement les mêmes, un seul dispositif peut être utilisé pour commander l'écoulement des fluides à irradier et des fluides phototransformés; il est également possible d'équiper chaque photoréacteur d'un dispositif de suivi.

S'il existe plusieurs méthodes de mesure de la concentration en acides α non-transformés, telles que la chromatographie liquide haute performance (HPLC), la spectroscopie d'absorption UV, visible, on peut réaliser une mesure de la réaction, conformément à l'invention, in situ à l'aide d'une technique spectrométrique. Il faut, toutefois, quand l'avancement de la réaction est de 0,95, que la densité optique D de la solution à la longueur d'onde d'analyse soit mesurable. Ceci impose un choix de longueurs d'onde compris entre 400 et 420 nm, la valeur moyenne 410 pouvant être choisie à l'aide d'un filtre interférentiel adapté.

Pour $\lambda$ = 410 nm, e = 2 mm, la densité optique doit être de 0,465 = $D_o$. Le système de mesure in situ par spectrométrie qui assure le suivi de la réaction, représenté à la fig. 9, comporte un filtre neutre 33 de densité optique 0,465 (pour une épaisseur e = 2 mm), un filtre interférentiel 410 nm, 34, une photopile de référence $S_o$, 35 et une photopile de mesure $S_1$, 36. Le filtre neutre 33 est associé à un premier photoréacteur 37 du capteur conforme à l'invention lequel comporte un deuxième photoréacteur, 38, ainsi qu'une vitre de protection 4, les deux photoréacteurs 37 et 38 étant délimités par des parois de verre 39, 40, 41. Le filtre neutre 33 peut être constitué par un verre légèrement absorbant dans la masse. Le système proposé ne nécessite pas de source lumineuse; il fonctionne de la façon suivante:

a) comparaison de $S_1$ à $S_o$ au travers du filtre interférentiel 34: Si $S_1 \geqq S_o$, la densité optique de la solution est inférieure à $D_o$ et la solution photo-transformée est évacuée; Si $S_1 < S_o$, l'évacuation est arrêtée;

b) mesure de $S_o$.

En dessous d'un certain seuil (nuage très absorbant, nuit, etc.), le dispositif de suivi conforme à l'invention fait arrêter la circulation des fluides.

Pour e = 2 mm, Q = 50 cm³/h et une largeur moyenne de 20 cm, le débit volumique moyen $F_v$ par unité de largeur, qui s'écoule dans un feuillet d'épaisseur e est sensiblement de 7.10⁻⁸ m³/sec., entraînant une perte de charge de 0,0315 pascal/mètre, c'est-à-dire suffisamment faible pour que la circulation du liquide à l'intérieur des photoréacteurs n'offre pas de difficultés; il est cependant opportun de pourvoir le photoréacteur de soupapes de sécurité (non représentées) pour éviter les surpressions susceptibles d'endommager les plaques de verre.

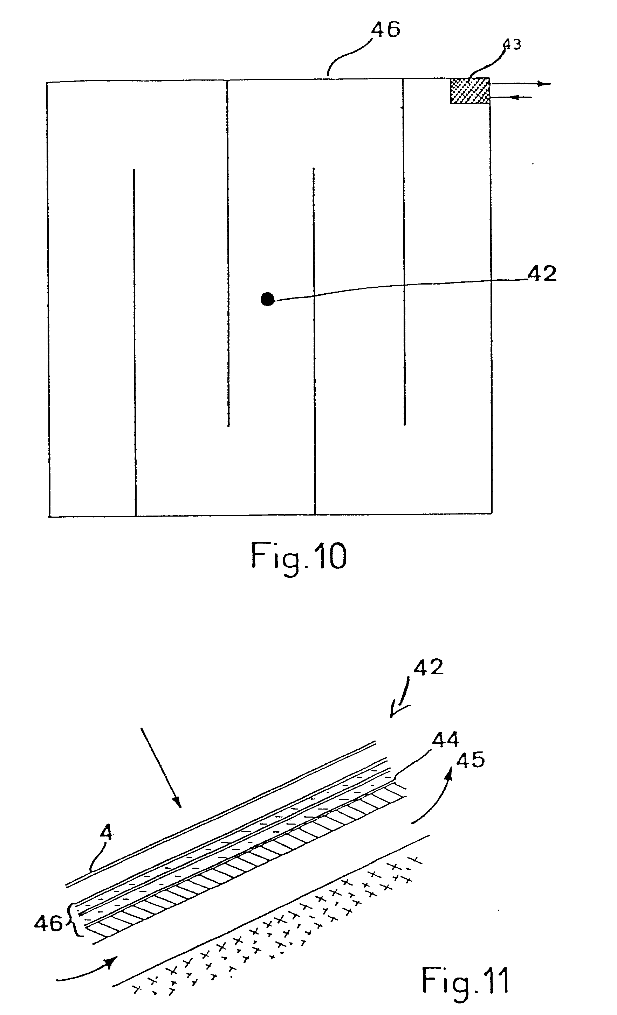

Pour éviter les risques de dégradation thermique des acides iso-α formés dans des solutions qui ne seraient pas parfaitement dégazées, on peut prévoir un photoréacteur double-épaisseur (cf. fig. 10) dans lequel l'épaisseur entre les lames est de l'ordre de 2 mm, correspondant à un temps de séjour de 1 à 2 jours; la taille d'un photoréacteur de «base» est d'environ 1 m × 1 m. Ce type de capteur est associé à un capteur thermique 42 et il est avantageusement, mais non limitativement, monté sur un support fixe.

Plusieurs de ces photoréacteurs «double-épaisseur» peuvent être montés en série et peuvent être couplés à un dispositif de suivi de la réaction 43 et à un capteur thermique 42 uniques, ou bien chacun d'eux est équipé d'un dispositif de suivi de la réaction et d'un capteur thermique.

Le capteur thermique (cf. fig. 11) est constitué par un absorbeur classique 44 en tôle noire sur laquelle sont soudées des ailettes de refroidissement 45 et qui est couplé avec un photoréacteur 46 du type de celui représenté à la fig. 10, avec une vitre de protection 4 en verre transparent aux UV comme mentionné plus haut. En cas de non fonctionnement de la ventilation, pour que la température du photoréacteur ne dépasse en aucun cas 80°C, il convient de pourvoir le capteur solaire conforme à l'invention, d'une électrovanne à ouverture rapide pour la vidange de l'alcool ou d'une plaque-rideau opaque de limitation du flux de photons dans le réacteur.

Après phototransformation des solutions, on sépare l'alcool utilisé comme solvant, par distillation; il est avantageux, dans ce but, d'utiliser un capteur plan à distillation conçu selon le principe de capteurs à distillation utilisés pour le dessalement de l'eau de mer.

Compte tenu de la quantité de photons utiles arrivant sur un m² de capteur la quantité d'acides α que l'on peut transformer annuellement est variable selon le degré d'ensoleillement de la zone considérée.

C'est ainsi que selon les régions géographiques et les types de capteurs plans utilisés, les quantités phototransformables varient comme le montre le tableau 2 ci-après:

Tableau 2
Quantités d'acides α phototransformables annuellement

| Région géographique | Capteur plan fixe | Capteur plan fixe position modifiée | Capteur plan mobile, avec suivi du soleil |
|---|---|---|---|
| Nancy | 6,75 kg/m²/an | 7,75 kg/m²/an | 9,8 kg/m²/an |
| Saint-Raphaël | 13,3 kg/m²/an | 15 kg/m²/an | 19,6 kg/m²/an |
| Australie Sahara Egypte } | 20 kg/m²/an | — | 27,5 kg/m²/an |

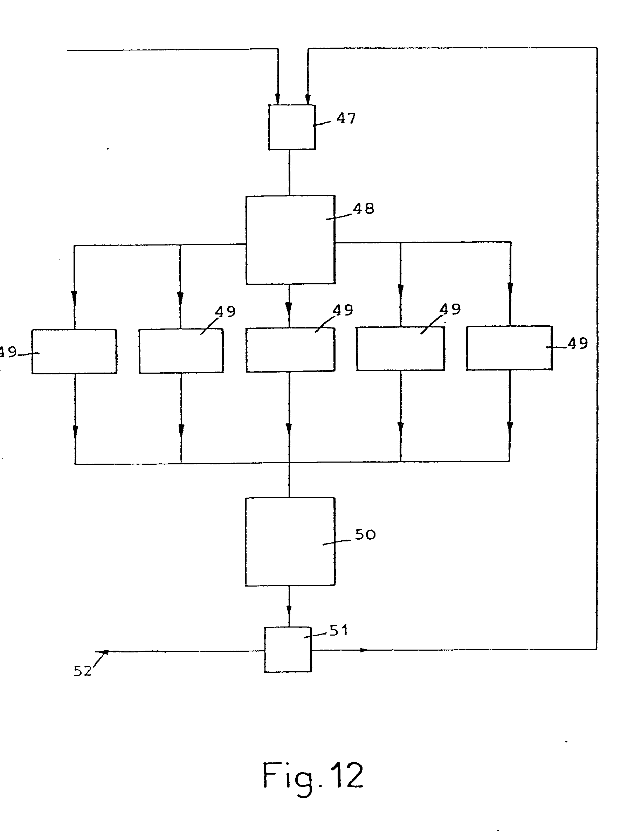

Le schéma d'une installation de phototransformation d'acides utilisant un capteur solaire plan est représenté à titre d'exemple non limitatif à la fig. 12.

Les produits de départ, acides α purifiés et alcool, sont introduits dans un réservoir de mélange 47 de manière à obtenir une solution à 30 g/litre. Cette solution est soumise à un traitement de barbotage de $CO_2$ pour éliminer l'oxygène dissous dans la solution, puis est envoyée dans un réservoir de stockage 48, d'où elle est envoyée dans une pluralité de photoréacteurs 49, à la sortie desquels les solutions phototransformées d'acides iso-α sont collectées dans un réservoir collecteur 50, après quoi ces solutions phototransformées sont soumises à distillation sur une colonne de distillation 51, pour récupérer l'alcool qui est recyclé dans le réservoir de mélange 47. Les acides iso-α sont récupérés à leur sortie 52 de la colonne de distillation 51.

L'utilisation de concentrateurs d'énergie solaire pour la photolyse d'acides α et/ou β permet de prévoir pour la phototransformation des acides α, un temps de séjour plus réduit de ces derniers dans le capteur solaire conforme à l'invention, et de réaliser la phototransformation des acides β sans avoir à les soumettre à un dégazage soigné.

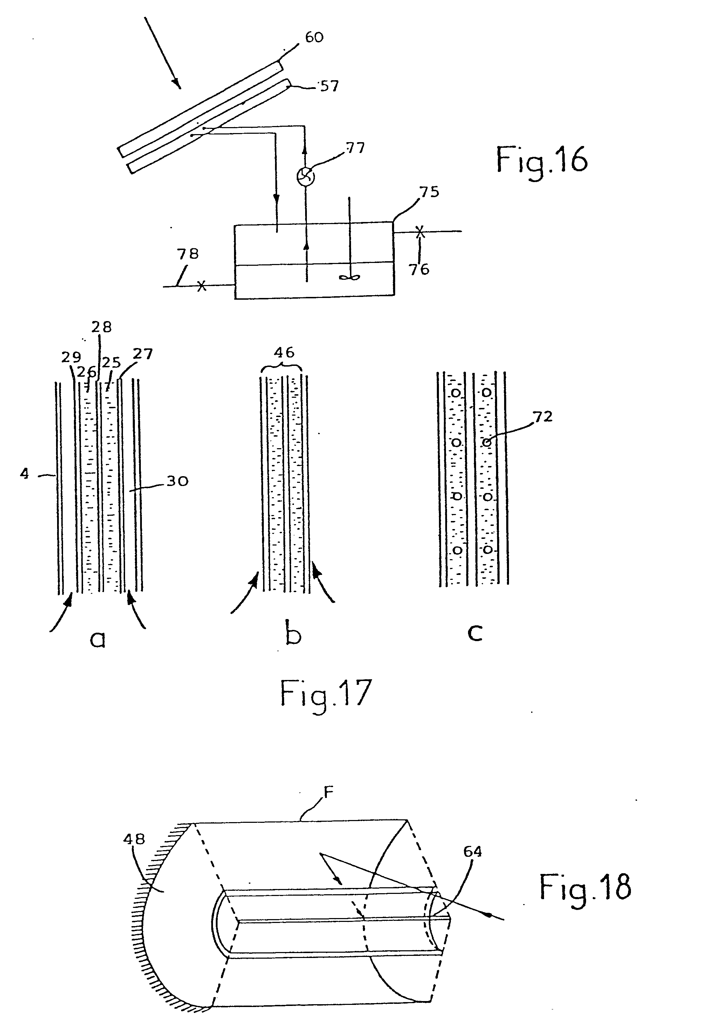

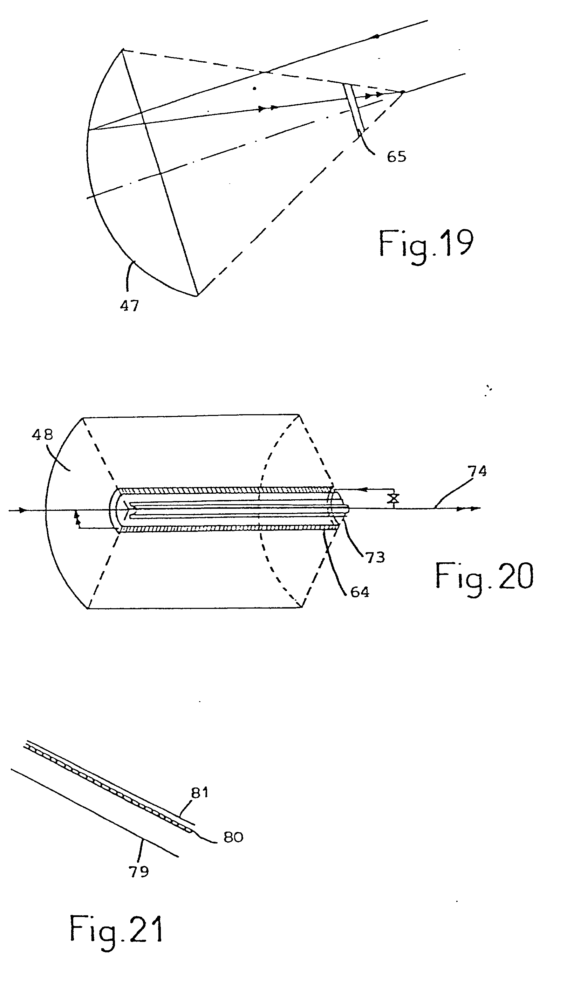

Ces concentrateurs sont avantageusement de forme parabolique (cf. fig. 19) ou cylindro-parabolique (cf. fig. 18 et 20). De tels concentrateurs paraboliques 47 sont utilisés comme des réflecteurs, de telle manière que tout rayon arrivant sur la surface parallèlement à l'axe est réfléchi vers un point focal F. Dans le cas du cône de réflexion que l'on obtient avec le rayonnement solaire, son axe passe par F et l'image du soleil s'étend autour de F. En théorie, on devrait obtenir une concentration géométrique $C_G$ maximum pour un angle d'ouverture $\theta_o$ égal à 45°. En fait, comme il est impossible de réaliser des surfaces parfaites et de les diriger parfaitement vers le soleil on donne une valeur supérieure à 45° à l'angle que fait le cône réfléchi avec le cône incident. Dans les concentrateurs cylindro-paraboliques 48, la surface réfléchissante de forme cylindro-parabolique concentre le rayonnement sur un plan F autour d'une ligne focale (cf. fig. 18 et 20), réalisant ainsi une concentration linéaire.

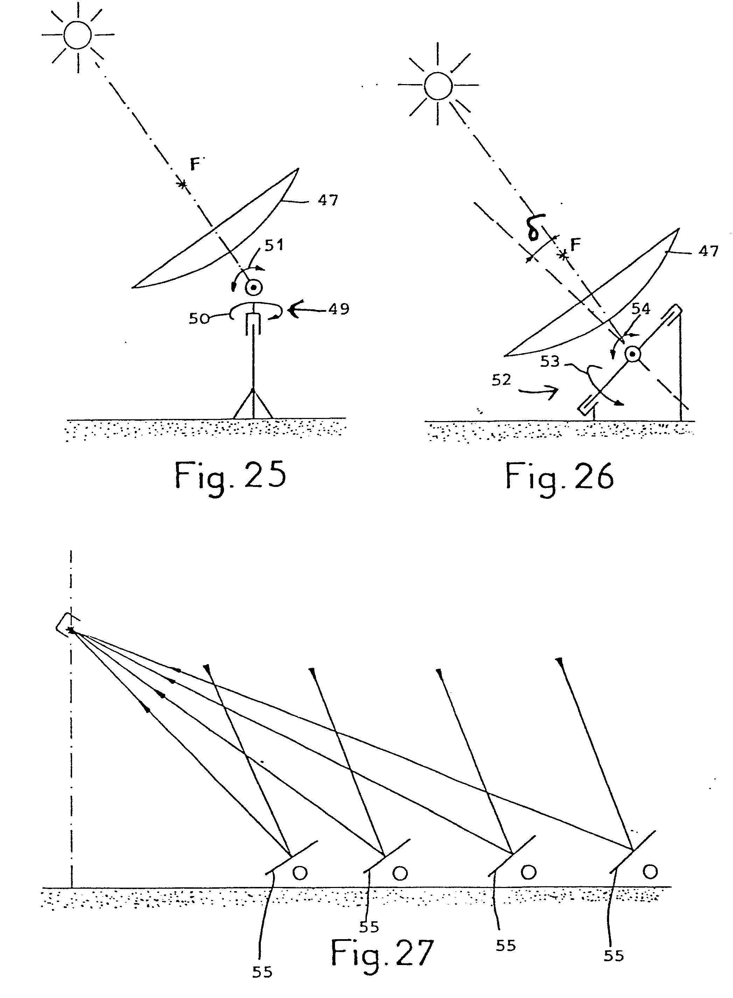

Pour permettre à la surface réfléchissante de ces capteurs à concentration de suivre la position apparente, constamment variable, du soleil, on place la surface réfléchissante – paraboloïde ou surface cylindro-parabolique – sur une monture qui permet de maintenir l'axe de la surface constamment pointé vers le soleil. De telles montures, qui sont connues en elles-mêmes, sont représentées schématiquement dans les fig. 25, 26 et 27.

La fig. 25 montre un paraboloïde de réflexion placé sur une monture 49 mobile autour de deux axes, l'un vertical 50 (mouvement en azimut), l'autre horizontal (mouvement en hauteur ou en site) 51.

La fig. 26 montre un paraboloïde de réflexion placé sur une monture 52 qui tourne autour d'un axe 53 parallèle à l'axe du monde (mouvement en angle horaire) et autour d'un axe 54 orthogonal au précédent (mouvement en déclinaison).

Pour éviter le morcellement des surfaces requis par ces deux montures pour ne pas avoir recours à des appareillages gigantesques, on utilise, pour les grandes étendues de captation, des dispositifs d'orientation dits champs de miroirs 55 (cf. fig. 27). Bien entendu, d'autres dispositifs de suivi du soleil que ceux succinctement décrits dans ce qui précède et représentés aux fig. 25 à 27, peuvent être utilisés en fonction des besoins et des conditions d'exploitation.

En particulier, dans le cas des capteurs cylindro-paraboliques dont l'axe principal est orienté est/ouest, on effectue la poursuite du soleil par une simple rotation du capteur, uniquement autour de l'axe est/ouest (poursuite en hauteur), encore que dans un tel système à rotation autour d'un seul axe, la quantité d'énergie captée soit inférieure à ce qu'elle est avec le système à rotation autour de deux axes, c'est-à-dire poursuite intégrale du soleil.

La phototransformation a lieu dans un capteur thermique solidaire du capteur à concentration, qui sera décrit plus loin.

Le tableau 3 ci-dessous rassemble les valeurs des coefficients d'extinction moléculaire ε des acides α et des acides β en solution acide alcoolique.

Tableau 3
Coefficients d'extinction moléculaire ε des acides
α et β

| Longueur d'onde nm | $\varepsilon_\alpha$ mole$^{-1}$.l.cm$^{-1}$ | $\varepsilon_\beta$ mole$^{-1}$.l.cm$^{-1}$ |
|---|---|---|
| 330 | 9060 | 8860 |
| 340 | 8620 | 9530 |
| 350 | 7740 | 10000 |
| 360 | 7260 | 9500 |
| 370 | 6720 | 6980 |
| 380 | 5220 | 3300 |
| 390 | 2613 | 980 |
| 400 | 1340 | 204 |
| 410 | 465 | 40 |
| 420 | 120 | 5 |
| 430 | 30 | 0 |
| 440 | 3.6 | 0 |
| 450 | 0.9 | 0 |

Ce tableau fait apparaître que dès que la longueur d'onde dépasse 415-420 nm, il n'y a pratiquement plus d'absorption par les acides β, en sorte qu'une grande partie du flux excitateur est inutilisée. Il est donc particulièrement avantageux d'effectuer simultanément la photolyse des acides β et des acides α en procédant de la façon suivante:

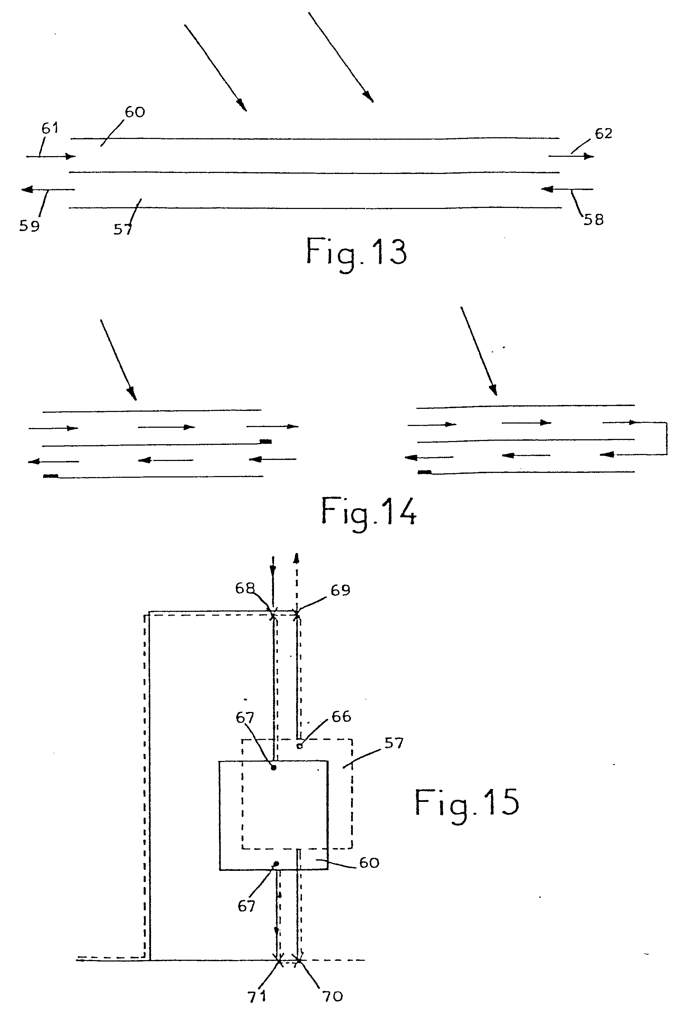

Après séparation des acides α et des acides β obtenus à partir d'un extrait de houblon hautement purifié, par exemple par chromatographie sur des résines échangeuses d'ions comportant des groupements –OH, on réalise la phototransformation des acides β et α dans un photoréacteur mixte du type de celui représenté à la fig. 13. Les acides α entrent dans le réacteur inférieur 57 à l'une des extrémités inférieures de ce dernier, en 58, et les acides iso-α transformés sortent en 59 à l'extrémité opposée de ce réacteur, tandis que les acides β entrent dans le réacteur 60 supérieur, en 61, l'entrée des acides β dans le réacteur supérieur 60 se trouvant du même côté que la sortie des acides iso-α transformés. Les acides désoxy-α obtenus par phototransformation des acides β quittent le photoréacteur 60 à l'extrémité opposée 62 de ce dernier. Dans ces conditions, c'est-à-dire en faisant circuler les acides α dans le réacteur intérieur et les acides β dans le réacteur supérieur qui est directement excité par le rayonnement solaire, les acides β font effet partiel de filtre interne pour les acides α sans cependant bloquer totalement la réaction des acides α → iso-α. En particulier, quand le taux d'avancement de la réaction acides β → désoxy-α est grand, l'absorption dans le réacteur supérieur 60 diminue et les acides α, en concentration importante au voisinage de l'entrée 58 du réacteur inférieur 57, absorbent notablement la lumière solaire. Les rendements en acides iso-α et désoxy-α obtenus, sont, en adoptant cette technique, très satisfaisants. En effet:

– pour une hauteur d'air traversée par le rayonnement solaire = 16 km
– un angle d'entrée du rayonnement solaire dans le photoréacteur mixte = 30°
– une épaisseur du photoréacteur mixte = 0,5 cm
– une circulation des acides α et β à contre-courant l'un de l'autre dans les réacteurs 57 et 60, on obtient, par exemple dans le cas d'un fonctionnement en continu dans lequel chacun des réacteurs 57 et 60 du photoréacteur mixte se compose de 20 éléments à concentration croissante, et compte tenu de la lenteur de la transformation des acides β, en traitant simultanément 10 kg d'acides α et 1 kg d'acides β respectivement dans les réacteurs inférieurs et supérieurs
– 9,8 kg d'acides iso-α phototransformés/m$^2$ de capteur solaire/an
– 0,70 kg d'acides désoxy-α phototransformés/m$^2$ de capteur solaire/an.

Ces résultats mettent en évidence une bien meilleure utilisation de la lumière utile que si l'on n'effectuait la phototransformation que des acides β seuls, dans les mêmes conditions. Il est donc plus rentable économiquement d'associer la phototransformation des acides α à celle des acides β.

Le suivi de la réaction acides α → iso-α peut avantageusement être réalisé à l'aide du dispositif de suivi de la réaction représenté à la fig. 9. En ce qui concerne le suivi de la réaction acides β → désoxy-α, on analyse la concentration des acides β restant en solution, en réglant le dispositif comme suit: quand l'avancement de la réaction est, par exemple, 0,95, il faut que la densité optique à la longueur d'onde d'analyse soit mesurable, c'est-à-dire inférieure à 2; ceci impose un choix de longueurs d'ondes compris entre 390 et 410 nm, la valeur moyenne 400 nm étant choisie à l'aide du filtre interférentiel adapté 34.

Dans un tel montage de photoréacteur mixte réalisant simultanément la phototransformation des acides α et β dans des réacteurs séparés, la phototransformation des acides α en iso-α est beaucoup plus rapide que celle des acides β en désoxy-α. Ainsi, lorsque tous les acides α seront transformés, il restera encore des acides β à phototransformer. Cette dernière phototransformation pourra alors être menée à sa fin en introduisant dans le photoréacteur inférieur 57, initialement prévu pour la phototransformation des acides α, les acides β à phototransformer, qui circuleront dans le réacteur inférieur 57 à contre-courant de leur circulation dans le réacteur supérieur 60: cf. fig. 14 dans la partie gauche de laquelle on se trouve dans l'hypothèse représentée à la fig. 13, d'une phototransformation simultanée des acides α et β respectivement dans le réacteur inférieur 57 et dans le réacteur supérieur 60, alors que dans la partie droite de la fig. 14 on se trouve dans l'hypothèse d'une phototransformation des acides β dans les deux réacteurs du photoréacteur mixte.

Ainsi que cela ressort de ce qui précède, le photoréacteur solidaire du concentrateur est un réacteur plan, du type des photoréacteurs représentés à la fig. 4 ou à la fig. 7, par exemple, mais non limitativement; ce photoréacteur réalisé selon le principe de fonctionnement représenté aux fig. 13 et 14, pour permettre la phototransformation simultanée des acides $\alpha$ et $\beta$, comprend deux photoréacteurs – un photoréacteur inférieur 57 et un photoréacteur supérieur 60 – et éventuellement, mais non obligatoirement, une vitre de protection 63 pour chacun des deux photoréacteurs individuels. Dans les fig. 18 à 20, le photoréacteur mixte plan ci-dessus a été désigné dans son ensemble par les références 64 et 65 respectivement.

Conformément à l'invention, un tel photoréacteur mixte plan, qui réalise la phototransformation simultanée des acides $\alpha$ et $\beta$, est équipé, comme décrit plus haut, d'un dispositif de suivi de la réaction des acides $\alpha$, 66, et d'un dispositif de suivi de la réaction des acides $\beta$, 67, ainsi que d'électrovannes 68 pour l'introduction des acides $\beta$ dans le photoréacteur supérieur 60, d'électrovannes 69 pour l'introduction des acides $\alpha$ dans le photoréacteur inférieur 57 et d'électrovannes 70 et 71 respectivement pour l'évacuation des acides iso-$\alpha$ et désoxy-$\alpha$ phototransformés, hors des photoréacteurs 57 et 60 (cf. fig. 15).

Le photoréacteur plan 64, 65, solidaire du concentrateur, conformément à la présente invention, est également pourvu de moyens de régulation de la température à l'intérieur du photoréacteur, du type des dispositifs de refroidissement par air, à l'aide d'ailettes ou par ventilation, représentés de façon plus détaillée aux fig. 5 et 6 décrites plus haut et schématisées aux fig. 17 a et b, la fig. 17 c schématisant une installation comportant une circulation 72 de liquide de refroidissement qui nécessite un système de stockage de liquide de refroidissement, et qui présente, par conséquent, moins d'intérêt que les systèmes de refroidissement par air, moins onéreux et non consommateurs d'un liquide de refroidissement qui, outre qu'il requiert des installations annexes, est en outre souvent rare et parfois coûteux. Sous certains climats, il peut, en outre, être intéressant de prévoir un dispositif 73 de chauffage partiel du réacteur photochimique.

Ainsi qu'on l'a mentionné plus haut, 20% au plus de la lumière excitatrice sont utilisés pour la phototransformation des acides $\alpha$ et $\beta$ en acides iso-$\alpha$ et désoxy-$\alpha$ respectivement, en sorte qu'il est possible de récupérer sensiblement 80% de la lumière excitatrice, susceptibles d'être utilisés pour des applications thermiques. Si l'on considère que la surface totale de captage nécessaire pour obtenir 20 T/an d'acides désoxy-$\alpha$ et 37,5 T/an d'acides iso-$\alpha$ est d'environ 25 000 m$^2$ et que cette installation est apte à fournir 76 MW environ en éclairement direct, près de 61 MW environ de chaleur concentrée, seront disponibles pour des applications thermiques autres que la phototransformation des acides $\alpha$ et $\beta$ et pourront être récupérés par l'industrie. A cet effet, les capteurs à concentration conformes à la présente invention peuvent être équipés d'un dispositif de récupération et de stockage de ladite chaleur concentrée en vue de son transfert vers d'autres applications ou d'une installation de transformation en énergie électrique. La présence de ces installations est suggérée dans la fig. 20 par la flèche 74.

Si, conformément à l'invention, on utilise un capteur à concentration comportant un concentrateur cylindro-parabolique 48 auquel est solidarisé un photoréacteur 64 comportant un photoréacteur supérieur 60 pour la phototransformation acides $\beta$ et un photoréacteur inférieur 57 pour la phototransformation des acides $\alpha$, dans le cas où le système fonctionne en discontinu, étant donné que les solutions respectives sont phototransformées dans chacun des photoréacteurs à des vitesses variant dans le rapport 3, on pourrait se trouver en présence de «bouchons» dans la partie du réacteur la moins éclairée, c'est-à-dire dans le réacteur inférieur. Dans ces conditions, il est avantageux, dans un fonctionnement en discontinu, d'utiliser en association avec le photoréacteur inférieur 57 qui contient les acides $\alpha$, un réservoir-tampon 75 qui élimine la formation de «bouchons» dans ce photoréacteur. La solution d'acides $\alpha$ est introduite suivant une cadence programmée, par l'intermédiaire d'électrovannes 76, dans le réservoir-tampon 75 à partir duquel elle est envoyée, à l'aide d'une pompe de circulation 77 dans le photoréacteur 57, d'où les acides iso-$\alpha$ sont soutirés, après transformation, pour être renvoyés dans le réservoir-tampon 75, d'où ils sont évacués par la sortie 78 (cf. fig. 16).

Dans le cas de l'utilisation de concentrateurs paraboliques tels que le concentrateur 47 de la fig. 19, il pourra être avantageux de pourvoir également le photoréacteur supérieur d'un système à réservoir-tampon du type de celui représenté à la fig. 16. Le système représenté à la fig. 16 pourra également être utilisé avec avantage pour la réalisation d'un photoréacteur destiné à la phototransformation des acides $\alpha$ uniquement ou des acides $\beta$ uniquement.

Alors que la plupart des miroirs actuellement prévus pour une application solaire sont réalisés en verre ordinaire avec une argenture arrière, conformément à la présente invention, le miroir parabolique 47 (fig. 19) ou cylindro-parabolique 48 (fig. 18 et 20) utilisé pour la concentration de l'énergie solaire en vue de la phototransformation des acides $\alpha$ et/ou $\beta$ en acides iso-$\alpha$ et/ou désoxy-$\alpha$, est avantageusement réalisé en un verre transparent aux ultra-violets nécessaires à la photoréaction; en variante, un tel miroir de verre, 79, pourra comporter une «argenture» avant 80, protégée par une couche de silice 81 vaporisée sur le miroir. Dans ces conditions, le verre, comme la mince couche de silice, absorbent une grande partie des rayonnements infra-rouges. L'on comprendra aisément que l'on entend par «argenture» non seulement l'application d'une couche d'Argent métallique jouant le rôle de réflecteur, mais également l'application avant de tout réflecteur métallique approprié dans le cadre de la présente invention.

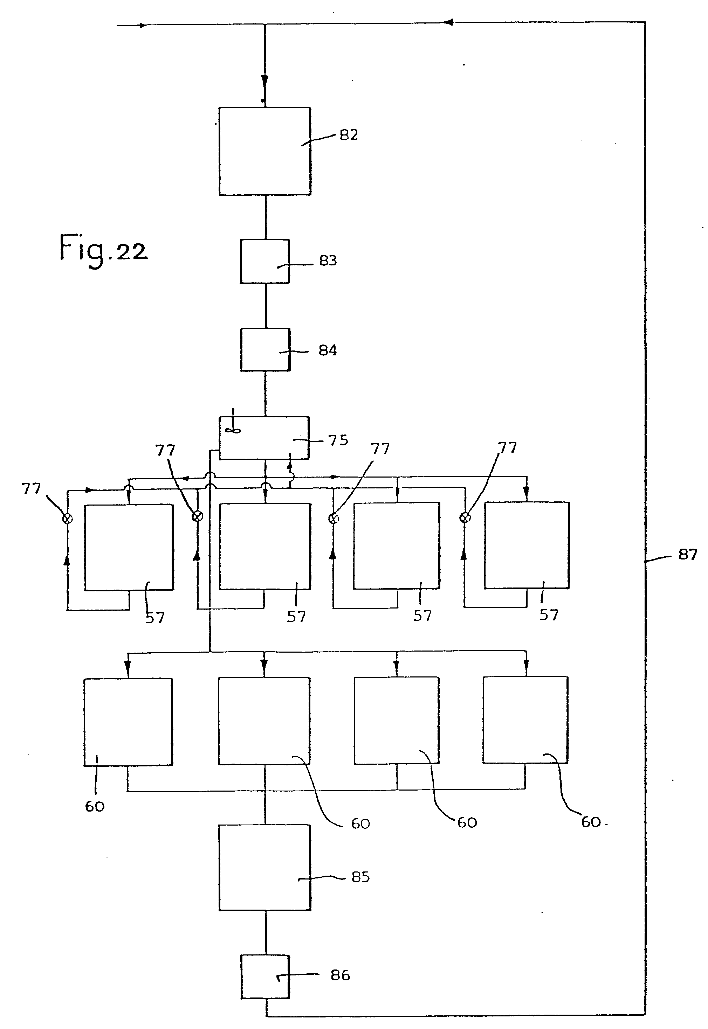

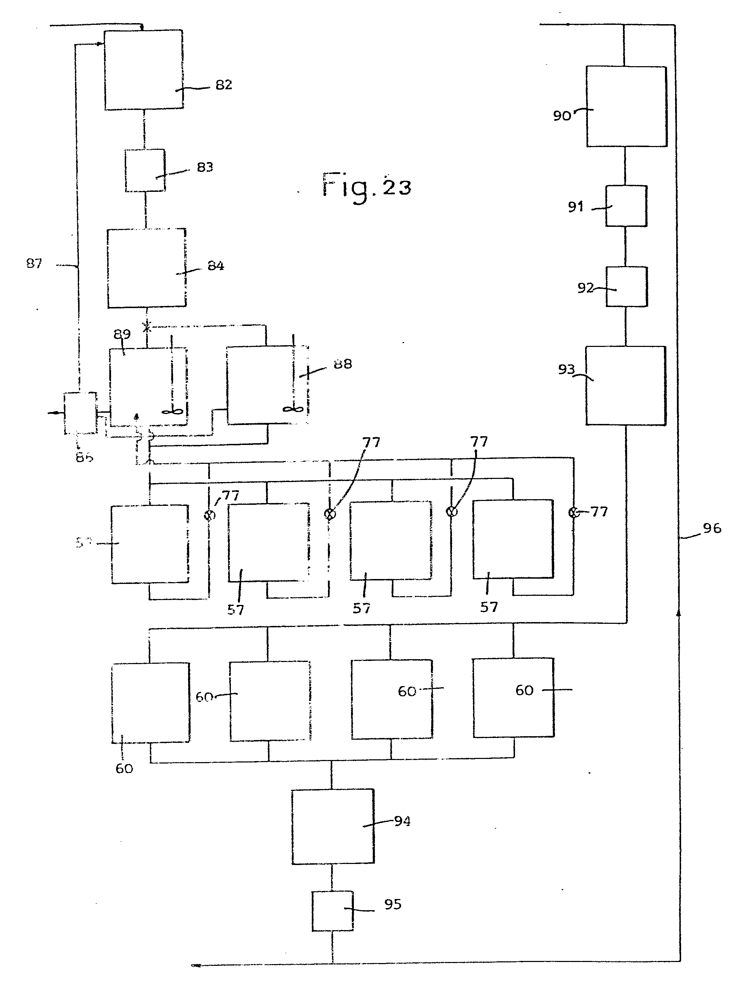

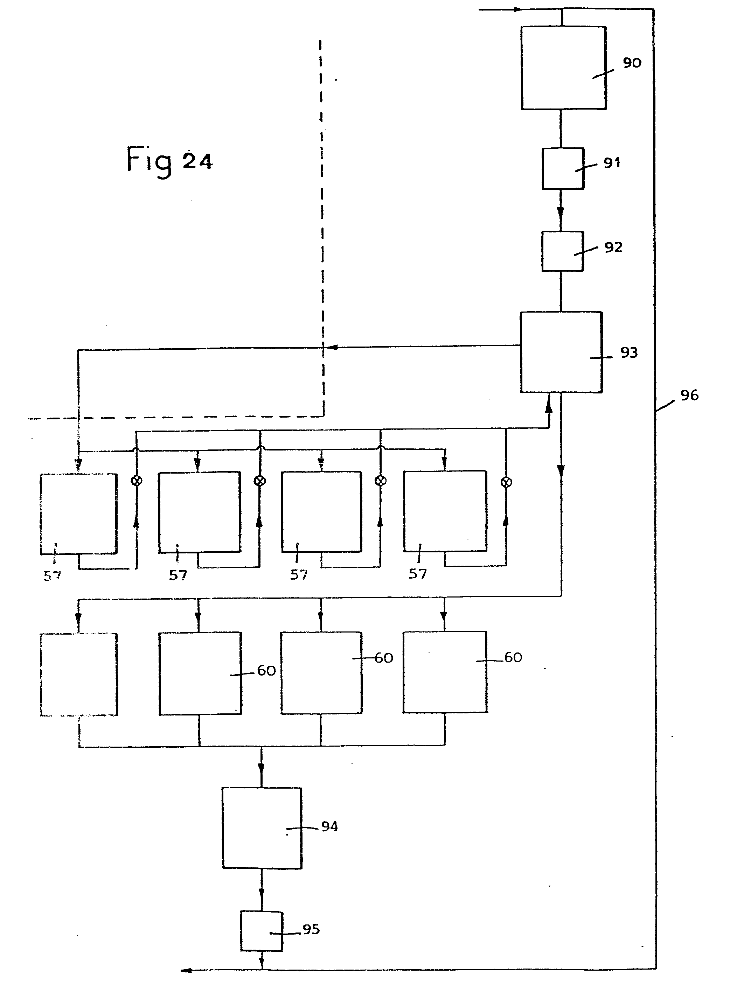

Les fig. 22 à 24 représentent des schémas d'ensemble d'installations conformes à la présente invention destinées à réaliser respectivement la phototransformation des acides α seuls (fig. 22), la phototransformation simultanée des acides α et des acides β (Fig. 23) et la phototransformation des acides β seuls.

Le schéma de l'installation de phototransformation des acides α représenté à la fig. 22 comporte un réservoir 82 dans lequel sont introduits respectivement les acides α préalablement séparés, par exemple par chromatographie, d'un extrait de houblon hautement purifié, et un alcool inférieur, tel que l'éthanol par exemple, dans des proportions propres à former une solution à 30 g/litre d'acides α; la solution ainsi obtenue est ensuite envoyée dans un bac de dégazage 83 dans lequel elle est débarrassée de l'oxygène dissous qu'elle contient, par exemple par bullage de $CO_2$; la solution dégazée est ensuite envoyée dans un réservoir de stockage 84 d'où elle est prélevée à une cadence programmée et suivant des quantités prédéterminées, pour parvenir dans un réservoir-tampon 75 d'où elle est envoyée, à l'aide de pompes de circulation 77, successivement dans chacun des photoréacteurs 57 inférieurs montés en série, et de là, successivement dans chacun des photoréacteurs 60 supérieurs montés en série. A sa sortie des photoréacteurs 60, la solution phototransformée contenant des acides iso-α est collectée dans un réservoir 85 d'où elle est envoyée dans une colonne de distillation 86 à la sortie de laquelle les acides iso-α transformés sont récupérés tandis que l'alcool séparé par distillation est recyclé, par la conduite 87, dans le réservoir 82 de préparation de la solution alcoolique d'acides α à phototransformer.

Le schéma de l'installation de phototransformation simultanée des acides α et β séparés au préalable à partir d'un extrait de houblon hautement purifié, représenté à la fig. 23, comporte, de même que l'installation représentée schématiquement à la fig. 22, un réservoir 82 de préparation de la solution alcoolique d'acides α à phototransformer, un bac de dégazage 83 et un réservoir de stockage 84; toutefois, à la différence de l'installation de la fig. 22, l'installation représentée à la fig. 23 comporte un réservoir-tampon 88 d'où la solution d'acides α à phototransformer est prélevée suivant une cadence programmée et en quantités prédéterminées à l'aide de pompes de circulation 77 pour parvenir dans les photoréacteurs inférieurs 57 montés en série d'où la solution phototransformée contenant des acides iso-α est envoyée dans un second réservoir-tampon 89 d'où elle est envoyée dans une colonne de distillation 86 d'où l'alcool séparé par distillation est recyclé par la canalisation 87, dans le réservoir 82, tandis que les acides iso-α sont récupérés à la base de la colonne 86. Parallèlement à cette installation de phototransformation des acides α, l'installation représentée à la fig. 23, comporte, par ailleurs, un réservoir 90 de préparation d'une solution alcoolique à 30 g/litre d'acides β, d'où la solution alcoolique obtenue est envoyée à un bac de dégazage 91, dans lequel l'oxygène dissous dans la solution est éliminé, par exemple par bullage de $CO_2$, puis la solution dégazée est envoyée dans un réservoir de stockage 92 d'où elle est prélevée à une cadence programmée et en quantités prédéterminées pour parvenir dans un réservoir-tampon 93. Comme les acides β sont plus sensibles à l'oxydation que ne le sont les acides α, il est avantageux de pourvoir le réservoir-tampon de moyens de dégazage supplémentaires de l'oxygène qui reste encore dissous dans la solution après le premier dégazage; dans ce cas également, les moyens de dégazage peuvent être constitués par un barbotage de $CO_2$ dans la solution alcoolique d'acides β à transformer. La solution alcoolique d'acides β, dûment dégazée, contenue dans le réservoir-tampon 93, est prélevée à une cadence programmée et en quantités prédéterminées pour être envoyée dans les photoréacteurs supérieurs 60 à partir desquels les solutions phototransformées contenant des acides désoxy-α sont collectées dans un réservoir 94 d'où elles sont envoyées dans une colonne de distillation 95 à la base de laquelle les acides désoxy-α débarrassés de l'alcool sont récupérés, tandis que l'alcool séparé par distillation est recyclé, par la canalisation 96, dans le réservoir 90 de préparation de la solution alcoolique d'acides α à phototransformer.

Dans l'installation de phototransformation des acides β seuls représentée à la fig. 2, la solution alcoolique d'acides β à 30 g/litre préparée dans le réservoir 90, dégazée dans le bac de dégazage 91, puis stockée dans le réservoir de stockage 92 est envoyée de façon programmée et en quantités prédéterminées à partir du réservoir-tampon 93, d'une part dans chacun des photoréacteurs inférieurs 57 montés en série, et d'autre part dans chacun des photoréacteurs supérieurs 60 montés en série; à noter que la solution partiellement phototransformée dans les photoréacteurs inférieurs 57 est renvoyée dans le réservoir tampon 93 d'où elle est ensuite envoyée dans les photoréacteurs supérieurs 60. Les solutions alcooliques photolysées contenant des acides désoxy-α sont collectées dans le réservoir 94 puis distillées dans la colonne de distillation 95 d'où l'alcool séparé par distillation est recyclé, par la canalisation 96, dans le réservoir 90 de préparation de la solution alcoolique d'acides β à phototransformer, tandis que les acides désoxy-α transformés sont recueillis à la base de la colonne et récupérés en vue de leur transformation en acides α et de l'introduction des acides-α ainsi obtenus dans l'installation de traitement conforme à l'invention. Dans les schémas d'installations représentés aux fig. 22 à 24, les photoréacteurs plans sont utilisés soit seuls, soit en association avec des concentrateurs du type de ceux représentés aux fig. 18 à 20.

Ainsi que cela ressort de ce qui précède, l'invention ne se limite nullement à ceux de ses modes de mise en œuvre, de réalisation et d'application qui viennent d'être décrits de façon plus explicite; elle en embrasse, au contraire, toutes les variantes qui peuvent venir à l'esprit du technicien en la matière, sans s'écarter du cadre, ni de la portée, de la présente invention.

## Revendications

1. Procédé de valorisation des acides $\alpha$ et $\beta$ pratiquement purs obtenus à partir d'un extrait de houblon hautement purifié, notamment par traitement par l'anhydride carbonique liquide, les acides $\alpha$ et $\beta$ obtenus étant, le cas échéant, séparés par chromatographie sur colonne de silice ou de résines échangeuses d'ions comportant des groupes hydroxyle, puis soumis à une phototransformation par la lumière solaire, caractérisé en ce que ladite phototransformation est réalisée par filtration de la lumière solaire dans la longueur d'onde comprise entre 300 et 440 nm, par concentration du rayonnement solaire à l'aide d'un capteur approprié pour obtenir une intensité lumineuse au moins égale à $I_a = 9,6 \times 10^{-5}$ kilowatts/litre et en maintenant la réaction de photoisomérisation, à une température sensiblement constante, voisine de 60°C, de manière à obtenir un rendement quantique optimal.

2. Procécé selon la revendication 1, caractérisé en ce que la réaction de phototransformation – ou photoisomérisation – est maintenue à une température sensiblement constante par couplage dudit photoréacteur avec un capteur thermique.

3. Procédé selon la revendication 1, caractérisé en ce que la phototransformation des acides $\alpha$ et/ou $\beta$ est réalisée en phase solide.

4. Procédé selon l'une quelconque des revendications 1 à 3, caractérisé en ce que la phototransformation des acides $\alpha$ et/ou $\beta$ est réalisée en phase liquide.

5. Procédé selon la revendication 4, caractérisé en ce que les acides $\alpha$ et/ou $\beta$ à phototransformer sont, préalablement à leur introduction dans le photoréacteur, mis en solution dans un alcool tel que l'éthanol, le t-butanol, le méthanol, l'isopropanol, la concentration des acides $\alpha$ dans l'alcool étant de l'ordre de 0,1 mole/litre (soit sensiblement 30 g/litre).

6. Procédé selon la revendication 5, caractérisé en ce que les solutions alcooliques d'acides $\alpha$ et/ou $\beta$ sont, préalablement à la phototransformation, débarrassées de l'oxygène dissous par dégazage par bullage de $CO_2$.

7. Procédé selon l'une quelconque des revendications 5 et 6, caractérisé en ce qu'une fois la phototransformation réalisée, l'alcool est éliminé par distillation.

8. Procédé selon la revendication 1, caractérisé en ce que l'on réalise simultanément la phototransformation des acides $\alpha$ et des acides $\beta$ au moyen de deux photoréacteurs associés par superposition, la phototransformation des acides $\alpha$ ayant lieu dans le photoréacteur inférieur.

9. Procédé selon la revendication 8, caractérisé en ce que les solutions d'acides $\alpha$ et d'acides $\beta$ circulent à contre-courant l'un de l'autre dans leurs photoréacteurs respectifs.

10. Capteur de phototransformation pour la mise en œuvre du procédé selon l'une quelconque des revendications 1 à 9, caractérisé en ce qu'il est essentiellement constitué par au moins un photoréacteur pour la réalisation de la phototransformation des acides $\alpha$ et/ou $\beta$ en acides iso-$\alpha$ et/ou désoxy-$\alpha$ couplé à au moins un capteur thermique.

11. Capteur selon la revendication 10, caractérisé en ce qu'il comprend un capteur plan qui comporte un absorbeur (2) porté par un matériau isolant (2) arrière qui délimite avec une vitre (3) transparente au flux solaire visible et opaque au rayonnement infra-rouge de grande longueur d'onde ($\lambda \geqq 2,5$ µm) disposée à un intervalle déterminé dudit absorbeur, un photoréacteur, lequel contient les acides $\alpha$ et/ou $\beta$ à phototransformer, sous forme solide ou en solution alcoolique, une vitre de protection (4) étant éventuellement superposée à la vitre (3) constituant la paroi du photoréacteur, à un intervalle déterminé de cette dernière.

12. Capteur selon la revendication 11, caractérisé en ce que la vitre de protection (4) de la vitre (3) constituant la paroi du photoréacteur est également transparente au flux solaire visible et opaque au rayonnement infra-rouge de grande longueur d'onde ($\lambda \geqq 2,5$ µm).

13. Capteur selon l'une quelconque des revendications 11 et 12, caractérisé en ce qu'il est constitué par le couplage de deux photoréacteurs plans superposés qui évitent les pertes d'absorption de la lumière, le premier photoréacteur (25) étant délimité par l'absorbeur (2) sur sa face arrière et par une vitre (28) sur sa face avant, et le second photoréacteur (26) étant délimité par cette dernière vitre et par une deuxième vitre (29) qui lui est superposée à un intervalle déterminé, pour constituer la paroi du deuxième photoréacteur plan, une vitre de protection (4) extérieure étant éventuellement, en outre, placée à un intervalle déterminé de ladite deuxième vitre.

14. Capteur selon l'une quelconque des revendications 10 à 13, caractérisé en ce que le capteur plan est pourvu de moyens de régulation de la température à l'intérieur du ou des photoréacteur(s).

15. Capteur selon la revendication 14, caractérisé en ce que lesdits moyens de régulation de la température sont constitués par ladite vitre de protection (4).

16. Capteur selon la revendication 14, caractérisé en ce que lesdits moyens de régulation sont constitués par une pluralité de lames orientables (19) dont la position dépend d'un capteur de température, lesquelles sont interposées entre l'isolant (1) et l'absorbeur (2).

17. Capteur selon la revendication 14, caractérisé en ce que lesdits moyens de régulation sont constitués par une ventilation forcée (22), interposée entre le matériau isolant arrière (1) et l'absorbeur (2), laquelle ventilation forcée est assurée par une structure métallique (24) creuse dans laquelle on fait circuler de l'air à un débit approprié et à la température extérieure, pour assurer le refroidissement du capteur, cette structure servant, en outre, de support à l'absorbeur.

18. Capteur selon la revendication 14, caractérisé en ce que lesdits moyens de régulation sont constitués par un réseau tubulaire (72) de circulation d'un liquide réfrigérant ou chauffant, interposé entre l'isolant (1) et l'absorbeur (2), et dans lequel le liquide réfrigérant ou chauffant circule suivant un débit régulé par tous moyens appropriés, et notamment à l'aide d'une électrovanne.

19. Capteur selon l'une quelconque des revendications 11 à 18, caractérisé en ce que l'épaisseur du ou d'un photoréacteur du capteur est comprise entre 0,13 et 1 cm et est choisie de manière à assurer une absorption maximale des photons utiles à la phototransformation des acides α et/ou β en fonction de la durée de séjour des acides α et/ou β dans le photoréacteur.

20. Capteur selon l'une quelconque des revendications 11 à 19, caractérisé en ce qu'il est équipé d'un dispositif de suivi de la réaction de phototransformation qui réalise la mesure de la réaction de phototransformation in situ par spectrométrie et qui est avantageusement constitué, en combinaison, par un filtre neutre (33) de densité optique $D_o$ mesurable à la longueur d'onde d'analyse, qui est comprise entre 400 et 420 nm, et choisie en fonction de l'épaisseur du ou de l'un des photoréacteur(s) (notamment $D_o$ = 0,465 pour une longueur d'onde de 410 nm et une épaisseur du photoréacteur de 2 mm), lequel filtre neutre est associé au ou à un des photoréacteur(s), un filtre interférentiel (34) pour la valeur moyenne de 410 nm, une photopile de référence (35) et une photopile de mesure (36).

21. Capteur selon la revendication 20, caractérisé en ce que le filtre neutre (33) est réalisé en un verre légèrement absorbant dans la masse.

22. Capteur selon l'une quelconque des revendications 11 à 21, appliqué à la phototransformation d'acides α et/ou β en solution alcoolique, caractérisé en ce qu'il est constitué par une pluralité de réacteurs individuels ($C_1$ à $C_{20}$) montés en série et/ou en parallèle, dans lesquels circule successivement une solution alcoolique d'acides α et/ou β à concentrations croissantes du photoréacteur d'entrée au photoréacteur de sortie, un tel agencement permettant le fonctionnement du capteur de phototransformation en continu.

23. Capteur selon l'une quelconque des revendications 11 à 21, appliqué à la phototransformation d'acides α et/ou β en solution alcoolique, caractérisé en ce qu'il est constitué par une pluralité de réacteurs ($C_1$ à $C_{20}$) individuels montés en série et/ou en parallèle, dans lesquels circule successivement une solution alcoolique d'acides α et/ou β de même concentration, un tel agencement fonctionnant en discontinu.

24. Capteur selon l'une quelconque des revendications 11 à 23, caractérisé en ce qu'il est monté fixe.

25. Capteur selon l'une quelconque des revendications 11 à 23, caractérisé en ce qu'il est monté dans une monture assurant le suivi permanent du soleil, connue en elle-même.

26. Capteur selon l'une quelconque des revendications 11 à 23, caractérisé en ce qu'il comprend, en combinaison, au moins un photoréacteur (46) associé à un capteur thermique (42) qui déclenche la régulation thermique du photoréacteur.

27. Capteur selon la revendication 26, caractérisé en ce que le capteur thermique est constitué par un absorbeur (44) comportant une tôle noire sur laquelle sont soudées des ailettes de refroidissement (45) par ventilation.

28. Capteur selon l'une quelconque des revendications 26 et 27, pour son application à la phototransformation d'acides α et/ou β en solution alcoolique, caractérisé en ce qu'un dispositif de sécurité comportant une électrovanne à ouverture rapide pour la vidange de l'alcool ou une plaque-rideau opaque de limitation du flux de photons dans le(s) photoréacteur(s), est associé à ce(s) dernier(s) pour empêcher une élévation de température dans le photoréacteur en cas de non-fonctionnement du capteur de régulation thermique.

29. Capteur selon l'une quelconque des revendications 11 à 28, caractérisé en ce qu'il est équipé de soupapes de sécurité associées à au moins un photoréacteur pour éviter les surpressions dans ce dernier pouvant endommager les vitres.

30. Capteur selon l'une quelconque des revendications 11 à 29, pour son application à la phototransformation d'acides α et/ou β en solution alcoolique, caractérisé en ce qu'il est constitué par un capteur à distillation permettant la distillation de l'alcool une fois la phototransformation réalisée.

31. Capteur selon la revendication 10, caractérisé en ce qu'il comprend un capteur de forme telle que le rayonnement solaire capté sur une surface soit dévié par un moyen approprié sur une autre surface, plus petite, sur laquelle se produit la phototransformation recherchée, cette forme étant de préférence celle d'un paraboloïde de révolution ou une forme cylindro-parabolique, qui constitue un capteur thermique, lequel est associé à un photoréacteur plan (64 ou 65), solidaire dudit capteur thermique, un tel montage permettant d'augmenter de façon considérable l'intensité lumineuse concentrée dans le capteur (jusqu'à 100 fois et plus), par rapport à l'utilisation d'un capteur plan seul.

32. Capteur selon la revendication 31, caractérisé en ce que le capteur thermique (47, 48) est réalisé en verre (79) comportant une couche métallique (80) réflectrice en avant du verre, laquelle couche métallique est protégée par une couche de silice (81) vaporisée sur le miroir, le verre et la mince couche de silice absorbant la majeure partie des rayonnements infra-rouges.

33. Capteur selon l'une quelconque des revendications 31 et 32, caractérisé en ce que le photoréacteur plan solidaire du capteur thermique est un photoréacteur selon l'une quelconque des revendications 11 à 13.

34. Capteur selon l'une quelconque des revendications 31 à 33, caractérisé en ce que la régulation de la température du photoréacteur est réalisée à l'aide de dispositifs de régulation à lames orientables (19), à ventilation forcée d'air (22) ou par un réseau tubulaire (72) de circulation d'un liquide de régulation de température selon l'une quelconque des revendications 14 à 18.

35. Capteur selon l'une quelconque des revendications 31 à 33, caractérisé en ce que le photoréacteur est essentiellement formé de deux réacteurs superposés (57, 60), couplés, fonctionnant à contre-courant, dont l'épaisseur est de l'ordre de 20 mm pour une épaisseur de vitre de l'ordre de 15 mm.

36. Capteur selon la revendication 34, caractérisé en ce que le couplage desdits deux réacteurs (57, 60) fonctionnant à contre-courant constitue un photoréacteur mixte de phototransformation simultanée des acides α et β séparés, présents respectivement dans les deux compartiments (57, 60) du photoréacteur, ou un photoréacteur pour la phototransformation des acides α ou des acides β uniquement, par circulation de ceux-ci successivement dans les deux compartiments (57, 60) du photoréacteur.

37. Capteur selon l'une quelconque des revendications 31 à 36, caractérisé en ce que le photoréacteur est équipé d'un dispositif de suivi (43) des concentrations en acides α et β selon l'une quelconque des revendications 20 et 21.

38. Capteur selon l'une quelconque des revendications 35 à 37, caractérisé en ce que le photoréacteur plan est équipé d'électrovannes (68, 69, 70, 71) de commande de la circulation des solutions d'acides α et β vers les photoréacteurs (57, 60) et hors de ceux-ci en vue de la récupération des acides iso-α et/ou désoxy-α obtenus par phototransformation.

39. Capteur selon l'une quelconque des revendications 36 à 38, caractérisé en ce que dans le photoréacteur plan (65 ou 64) solidaire du concentrateur paraboloïdal (47) ou cylindro-parabolique (48), la phototransformation des acides α est réalisée dans le réacteur inférieur (57) et la phototransformation des acides β est réalisée dans le réacteur supérieur (60).

40. Capteur selon la revendication 39, caractérisé en ce que la circulation de la solution d'acides β à phototransformer dans le réacteur supérieur (60) se fait en pseudo-contrecourant, en continu ou en discontinu, et la phototransformation de la solution d'acides α dans le réacteur inférieur (57) est réalisée en discontinu avec interposition d'un réservoir-tampon (75) associé à une pompe de circulation (77) à l'aide de laquelle des charges appropriées sont introduites en discontinu dans ledit réacteur inférieur, suivant une cadence prédéterminée.

41. Installation pour la phototransformation des acides α et/ou β, caractérisée en ce qu'elle comprend, en combinaison: – un concentrateur de forme paraboloïdale ou cylindro-parabolique; – une première série de photoréacteurs inférieurs plans montés en série; – une deuxième série de photoréacteurs supérieurs plans montés en série; – au moins un réservoir-tampon associé à une pompe de circulation pour l'introduction de charges prédéterminées d'acides à phototransformer dans la première et/ou la deuxième séries de photoréacteur; – au moins un bac de collecte pour la récupération des acides iso-α et/ou des acides désoxy-α obtenus par phototransformation.

42. Installation selon la revendication 41, caractérisée en ce qu'elle comprend, en combinaison: – un concentrateur de forme paraboloïdale (47) ou cylindro-parabolique (48), selon l'une quelconque des revendications 31 et 32; – une première série de photoréacteurs inférieurs (57) plans montés en série, selon l'une quelconque des revendications 35 et 36; – une deuxième série de photoréacteurs supérieurs (60) plans montés en série, selon l'une quelconque des revendications 35 et 36; – au moins un bac de mise en solution des acides à phototransformer dans de l'alcool; – au moins un dispositif de dégazage de l'oxygène dissous dans la ou les solution(s) d'acide(s) à phototransformer, par bullage de $CO_2$; – au moins un réservoir-tampon associé à une pompe de circulation pour l'introduction de charges prédéterminées dans la première et/ou la deuxième série de photoréacteurs; – au moins un bac de collecte des solutions phototransformées; – au moins une colonne de distillation de l'alcool des solutions phototransformées; – au moins une conduite de recyclage (87) de l'alcool distillé dans le bac correspondant de mise en solution; – des moyens de récupération des acides iso-α et/ou des acides désoxy-α obtenus par phototransformation.

43. Installation selon la revendication 42, pour la phototransformation des acides α seulement, caractérisé en ce qu'elle comprend, en combinaison avec un concentrateur paraboloïdal (47) ou cylindro-parabolique (48), selon l'une quelconque des revendications 31 et 32; – un bac (82) de mise en solution des acides α introduits dans ledit bac dans de l'alcool à raison de 30 g/litre environ; – un bac (83) d'élimination de l'oxygène dissous dans la solution; – un réservoir (84) de stockage de la solution dégazée; – un réservoir-tampon (75) associé à au moins une pompe de circulation (77); – une première série de photoréacteurs inférieurs (57) plans montés en série, selon l'une quelconque des revendications 35 et 36; – une deuxième série de photoréacteurs supérieurs (60) plans montés en série, selon l'une quelconque des revendications 35 et 36; – au moins une canalisation de raccordement du réservoir-tampon (75) avec la première série de photoréacteurs, et au moins une canalisation de raccordement du réservoir-tampon (75) avec la deuxième série de photoréacteurs; – un réservoir collecteur (85) des solutions phototransformées à leur sortie des photoréacteurs; – une colonne de distillation (86) de l'alcool des solutions phototransformées collectées; – une canalisation (87) de recyclage de l'alcool séparé par distillation, dans le bac (82) de mise en solution, – et des moyens de récupération des acides iso-α à la sortie de la colonne de distillation.

44. Installation selon la revendication 42, pour la phototransformation des acides β seulement, caractérisée en ce qu'elle comprend, en combinaison avec un concentrateur paraboloïdal (47) ou cylindro-parabolique (48), selon l'une quelconque des revendications 31 et 32; – un bac (90) de mise en solution des acides β dans de l'alcool, à raison de 30 g/litre; – un bac (91) d'élimination de l'oxygène dissous dans la solution; – un réservoir de stockage (92) de la solution dégazée; – un réservoir-tampon (93) associé à au moins une pompe de circulation, et pourvu de moyens complémentaires d'élimination de l'oxygène dissous dans la solution, tels que bullage de $CO_2$ notamment; – une première série de photoréacteurs inférieurs (57) plans montés en série, selon l'une quelconque des revendications 35 et 36; – une deuxième série de photoréacteurs supérieurs (60) plans montés en série, selon l'une quelconque des revendications 35 et 36; – au moins une canalisation de raccordement du réservoir-tampon (93) avec la première série de photoréacteurs et au moins une canalisation de raccordement du réservoir-tampon (93) avec la deuxième série de photoréacteurs; – un réservoir (94) de collecte des solutions phototransformées à leur sortie des photoréacteurs; – une colonne (95) de distillation de l'alcool des solutions phototransformées collectées; – une canalisation (96) de recyclage de l'alcool séparé par distillation, dans le bac (90) de mise en solution – et des moyens de récupération des acides désoxy-α à la sortie de la colonne de distillation.

45. Installation selon la revendication 42, pour la phototransformation simultanée des acides α et β préalablement séparés à partir d'un extrait de houblon hautement purifié, caractérisé en ce qu'elle comprend en combinaison avec un concentrateur paraboloïdal (47) ou cylindro-parabolique (48), selon l'une quelconque des revendications 31 et 32; un bac (82) de mise en solution des acides α dans de l'alcool à raison de 30 g/litre; – un bac (90) de mise en solution des acides β dans de l'alcool à raison de 30 g/litre; – un bac (83) d'élimination de l'$O_2$ dissous dans la solution alcoolique d'acides α; – un bac (91) d'élimination de l'$O_2$ dissous dans la solution alcoolique d'acides β; – un réservoir de stockage (92) de la solution alcoolique d'acides α; – un réservoir de stockage (84) de la solution alcoolique d'acides β; – au moins un réservoir-tampon (88) relié au réservoir de stockage (84) de la solution alcoolique d'acides α et associé à au moins une pompe de circulation (77) pour l'introduction de ladite solution dans une première série de photoréacteurs inférieurs (57) plans montés en série; un réservoir-tampon (93) relié au réservoir de stockage (92) de la solution alcoolique d'acides β pourvu de moyens complémentaires d'élimination de l'$O_2$ encore dissous dans ladite solution, et associé à au moins une pompe de circulation pour l'introduction de ladite solution dans une deuxième série de photoréacteurs supérieurs (60) plans; – un réservoir de collecte (86) des solutions alcooliques d'acides iso-α obtenus par phototransformation à la sortie de la première série de photoréacteurs (57); – un réservoir de collecte (94) des solutions alcooliques d'acides désoxy-α obtenues par phototransformation, à la sortie de la deuxième série de photoréacteur (60); – une première colonne de séparation (86) par distillation de l'alcool des solutions phototransformées d'acides iso-α; – une deuxième colonne (95) de séparation par distillation de l'alcool des solutions phototransformées d'acides désoxy-α; – une canalisation de recyclage (87) de l'alcool séparé dans la première colonne de distillation, dans le bac (82) de mise en solution alcoolique des acides α; – une canalisation (96) de recyclage de l'alcool séparé dans la deuxième colonne (95) de distillation, dans le bac (90) de mise en solution alcoolique des acides β; – des moyens de récupération des acides iso-α à leur sortie de la première colonne; – et des moyens de récupération des acides désoxy-α à leur sortie de la deuxième colonne.

46. Capteur selon l'une quelconque des revendications 31 à 40, caractérisé en ce que le concentrateur paraboloïdal (47) ou cylindro-parabolique (48) auquel sont solidarisés les photoréacteurs, est pourvu d'un dispositif assurant son orientation constante en fonction de la position du soleil, connu en lui-même (49, 52 ou 55).

47. Capteur selon l'une quelconque des revendications 11 à 40, caractérisé en ce que le capteur est couplé avec des moyens de récupération de l'énergie induite par le rayonnement solaire incident absorbé par le capteur et non utilisé pour la phototransformation, et avec des installations d'utilisation de ladite chaleur concentrée pour des applications thermiques, notamment industrielles.

**Patentansprüche**

1. Verfahren der Wertsteigerung von praktisch reinen α- und β-Säuren, erhalten aus einem hochgereinigten Hopfenextrakt, insbesondere durch Behandlung mit flüssigem wasserfreiem Kohlendioxid, wobei die erhaltenen α- und β-Säuren gegebenenfalls getrennt werden durch Chromatographie auf Siliciumdioxid – oder Ionenaustauscher-Säulen mit Hydroxylgruppen, dann einer Phototransformation durch Sonnenlicht unterworfen werden, dadurch gekennzeichnet, dass die genannte Phototransformation durchgeführt wird durch Filtration des Sonnenlichtes in der Wellenlänge zwischen 300 und 400 nm, durch Konzentrierung der Sonnenstrahlung mit Hilfe eines geeigneten Fängers, zwecks Erhalt einer Lichtintensität von wenigstens $I_a = 9,6 \times 10^{-5}$ Kilowatt/l und unter Einhaltung einer im wesentlichen konstanten Temperatur von etwa 60°C bei der Reaktion der Phototransformation zum Erzielen einer optimalen Quantenausbeute.

2. Verfahren gemäss Anspruch 1, dadurch gekennzeichnet, dass die Reaktion der Phototransformation oder Photoisomerisation – bei einer im wesentlichen konstanten Temperatur gehalten wird durch Kopplung des genannten Photoreaktors mit einem thermischen Fänger.

3. Verfahren gemäss einem der Ansprüche 1 bis 2, dadurch gekennzeichnet, dass die Phototransformation der α- und/oder β-Säuren in fester Phase durchgeführt wird.

4. Verfahren gemäss einem der Ansprüche 1 bis 3, dadurch gekennzeichnet, dass die Phototransformation der α- und/oder β-Säuren in flüssiger Phase durchgeführt wird.

5. Verfahren gemäss Anspruch 4, dadurch gekennzeichnet, dass die zu phototransformierenden α- und/oder β-Säuren vor ihrer Einführung in den Photoreaktor in Lösung gebracht werden in einem Alkohol, wie insbesondere Ethanol, t-Butanol, Methanol, Isopropanol, wobei die Konzentration der α-Säuren im Alkohol in der Grössenordnung von 0,1 Mol/Liter ist (im wesentlichen 30 g/Liter).

6. Verfahren gemäss Anspruch 5, dadurch gekennzeichnet, dass die alkoholischen Lösungen von α- und/oder β-Säuren vor der Phototransformation von gelöstem Sauerstoff befreit werden durch Entgasung mittels Durchblubbern von $CO_2$.

7. Verfahren gemäss einem der Ansprüche 5 und 6, dadurch gekennzeichnet, dass, wenn die Photolyse durchgeführt ist, der Alkohol durch Destillation entfernt wird.

8. Verfahren gemäss Anspruch 1, dadurch gekennzeichnet, dass man die Phototransformation der α-Säuren und der β-Säuren gleichzeitig durchführt mittels zweier durch Übereinanderanordnung verbundenen Photoreaktoren, wobei die Phototransformation der α-Säuren im unteren Photoreaktor stattfindet.

9. Verfahren gemäss Anspruch 8, dadurch gekennzeichnet, dass die Lösungen von α-Säuren und von β-Säuren im Gegenstrom eine von der anderen zirkulieren in ihren jeweiligen Photoreaktoren.

10. Phototransformations-Fänger zur Durchführung des Verfahrens gemäss einem der Ansprüche 1 bis 9, dadurch gekennzeichnet, dass er im wesentlichen besteht aus wenigstens einem Photoreaktor zur Durchführung der Phototransformation der α- und/oder β-Säuren in Iso-α- und/oder Desoxy-α-Säuren, gekoppelt mit wenigstens einem thermischen Fänger.

11. Fänger gemäss Anspruch 10, dadurch gekennzeichnet, dass er aus einem flachen Fänger besteht, der einen Absorber (2) umfasst, getragen durch ein isolierendes Material (1) hinten, welches mit einer zum sichtbaren Fluss des Sonnenlichts durchlässigen und gegen Infrarot-Strahlung von grosser Wellenlänge ($\lambda \geqq 2,5\ \mu$m) undurchlässigen Scheibe (3), angebracht in bestimmtem Abstand von genanntem Absorber, begrenzt, einem Photoreaktor, der die zu phototransformierenden α- und/oder β-Säuren in fester Form oder in alkoholischer Lösung enthält, eine Schutzscheibe (4), die gegebenenfalls übereinander angebracht ist zur Scheibe (3), darstellend die Wand des Photoreaktors, in einem bestimmten Abstand von dieser letzteren.

12. Fänger gemäss Anspruch 11, dadurch gekennzeichnet, dass die Schutzscheibe (4) der Scheibe (3), die Wand des Photoreaktors darstellend, gleichermassen durchlässig ist für den Strom sichtbaren Sonnenlichts und undurchlässig für Infrarotstrahlen von grosser Wellenlänge ($\lambda \geqq 2,5\ \mu$m).

13. Fänger gemäss einem der Ansprüche 11 und 12, dadurch gekennzeichnet, dass er dargestellt ist durch die Verbindung von zwei planaren übereinander angeordneten Photoreaktoren, die die Absorptionsverluste des Lichtes vermeiden, wobei der erste Photoreaktor (25) begrenzt wird durch den Absorber (2) auf seiner Hinterseite und durch eine Scheibe (28), auf seiner Vorderseite, und der zweite Photoreaktor (26) begrenzt wird durch diese letztere Scheibe und durch eine zweite Scheibe (29), die über ihr angebracht ist in einem bestimmten Abstand, um die Wand des zweiten planaren Photoreaktors darzustellen, wobei unter anderem gegebenenfalls eine äussere Schutzscheibe (4) angebracht ist in einem bestimmten Abstand von genannter zweiter Scheibe.

14. Fänger gemäss einem der Ansprüche 10 bis 13, dadurch gekennzeichnet, dass der planare Fänger versehen ist mit Mitteln zur Regulierung der Temperatur im Innern des oder der Photoreaktoren.

15. Fänger gemäss Anspruch 14, dadurch gekennzeichnet, dass die genannten Mittel zur Regulierung der Temperatur dargestellt werden durch die genannte Schutzscheibe (4).

16. Fänger gemäss Anspruch 14, dadurch gekennzeichnet, dass die genannten Regulierungsmittel dargestellt werden durch eine Vielzahl orientierbarer Lamellen (19) deren Position abhängt von einem Temperaturfänger, die angebracht sind zwischen dem Isolator (1) und dem Absorber (2).

17. Fänger gemäss Anspruch 14, dadurch gekennzeichnet, dass die genannten Regulierungsmittel dargestellt werden durch eine erzwungene Ventilation (22), angebracht zwischen dem hinteren Isoliermaterial (1) und dem Absorber (2), wobei die genannte erzwungene Ventilation gesichert ist durch eine metallische hohle Struktur, in welcher man Luft bei einem entsprechenden Durchfluss zirkulieren lässt und bei äusserer Temperatur, zur Sicherung des Kühlens des Fängers, wobei diese Struktur unter anderem der Stützung des Absorbers dient.

18. Fänger gemäss Anspruch 14, dadurch gekennzeichnet, dass die genannten Regulierungsmittel dargestellt werden durch ein Röhren-Netz (72) zur Zirkulation einer Kühl- oder Heiz-Flüssigkeit, angebracht zwischen dem Isolator (1) und dem Absorber (2), und in dem die Kühl- oder Heiz-Flüssigkeit zirkuliert gemäss einem durch alle entsprechenden Mittel regulierten Durchfluss, und insbesondere mit Hilfe eines Elektro-Schiebers.

19. Fänger gemäss einem der Ansprüche 11 bis 18, dadurch gekennzeichnet, dass die Dicke des oder eines Photoreaktors vom Fänger zwischen 0,13 und 1 cm umfasst und gewählt ist in einer Weise, um eine maximale Absorption der nützlichen Photonen zu sichern für die Phototransformation der α- und/oder β-Säuren als Funktion der Aufenthaltsdauer der α- und/oder β-Säuren im Photoreaktor.

20. Fänger gemäss einem der Ansprüche 11 bis 19, dadurch gekennzeichnet, dass er ausgerüstet ist mit einer Vorrichtung zur Verfolgung der Phototransformations-Reaktion, die die Messung der Phototransformations-Reaktion in situ durch Spektrometrie ausführt, und die vorteilhafterweise besteht, in Kombination aus einem neutralen Filter (33) von optischer Dichte $D_o$, messbar bei der Analysen-Wellenlänge, die zwischen 400 und 420 nm umfasst, und gewählt als Funktion der Dicke des oder eines der Photoreaktoren (insbesondere $D_o = 0,465$ für eine Wellenlänge von 410 nm und eine Dicke des Photoreaktors von 2 mm), wobei das neutrale Filter an den oder an einem der Photoreaktoren angebracht ist, einem Interferenz-Filter (34) für den Mittelwert von 410 nm, einem Referenz-Photoelement (35) und einem Mess-Photoelement (36).

21. Fänger gemäss Anspruch 20, dadurch gekennzeichnet, dass das neutrale Filter (33) dargestellt ist aus einem in der Masse schwach absorbierendem Glas.

22. Fänger gemäss einem der Ansprüche 11 bis 21, angewendet zur Phototransformation von α- und/oder β-Säuren in alkoholischer Lösung, dadurch gekennzeichnet, dass er aus einer Vielzahl von einzelnen Reaktoren ($C_1$ bis $C_{20}$) besteht, aufgebaut in Serie und/oder parallel, in denen aufeinanderfolgend eine alkoholische Lösung von α- und/oder β-Säuren zirkuliert, bei zunehmenden Konzentrationen vom Eingangs-Photoreaktor zum Ausgangs-Photoreaktor, wobei eine solche Anordnung das Funktionieren des Photolyse-Fängers in kontinuierlicher Weise erlaubt.

23. Fänger gemäss einem der Ansprüche 11 bis 21, angewendet zur Phototransformation von α- und/oder β-Säuren in alkoholischer Lösung, dadurch gekennzeichnet, dass er aus einer Vielzahl von einzelnen Reaktoren ($C_1$ bis $C_{20}$) besteht, aufgebaut in Serie und/oder parallel, in denen aufeinanderfolgend eine alkoholische Lösung von α- und/oder β-Säuren von gleicher Konzentration zirkuliert, wobei eine solche Anordnung diskontinuierlich funktioniert.

24. Fänger gemäss einem der Ansprüche 11 bis 23, dadurch gekennzeichnet, dass er fest aufgebaut ist.

25. Fänger gemäss einem der Ansprüche 11 bis 23, dadurch gekennzeichnet, dass er in einem Gestell aufgebaut ist, das das permanente Verfolgen der Sonne sicherstellt, in an sich bekannter Weise.

26. Fänger gemäss einem der Ansprüche 11 bis 23, dadurch gekennzeichnet, dass er in Kombination wenigstens einen Photoreaktor (46) verbunden mit einem thermischen Fänger (42), der die thermische Regulierung des Photoreaktors auslöst, umfasst.

27. Fänger gemäss Anspruch 26, dadurch gekennzeichnet, dass der thermische Fänger aus einem Absorber (44) besteht, der ein schwarzes Blech umfasst, auf dem Kühlrippen/-Flügel (45) zur Kühlung durch Ventilation befestigt sind.

28. Fänger gemäss einem der Ansprüche 26 und 27, zur Verwendung bei der Phototransformation von α- und/oder β-Säuren in alkoholischer Lösung, dadurch gekennzeichnet, dass eine Sicherheitsvorrichtung, bestehend aus einem Elektroschieber mit schneller Öffnung zum Entleeren des Alkohols oder eine undurchlässige Vorhangs-Platte für Begrenzung des Photonen-Flusses in den (die) Photoreaktor(en), verbunden ist mit diesem (diesen) letzteren zur Verhinderung eines Temperaturanstieges im Photoreaktor im Falle des Nicht-Funktionierens des Fängers zur thermischen Regulierung.

29. Fänger gemäss einem der Ansprüche 11 bis 28, dadurch gekennzeichnet, dass er ausgerüstet ist mit Sicherheitsventilen verbunden mit wenigstens einem Photoreaktor zur Verhinderung von Überdrücken im letzteren, die die Scheiben beschädigen können.

30. Fänger gemäss einem der Ansprüche 11 bis 29, zur Verwendung bei der Phototransformation von α- und/oder β-Säuren in alkoholischer Lösung, dadurch gekennzeichnet, dass es dargestellt wird aus einem Fänger zur Destillation, der die Destillation des Alkohols bei durchgeführter Phototransformation erlaubt.

31. Fänger gemäss Anspruch 10, dadurch gekennzeichnet, dass er einen Fänger solcher Form umfasst, dass die auf einer Oberfläche eingefangene Sonnenstrahlung durch ein entsprechendes Mittel auf eine andere, kleinere Oberfläche abgelenkt wird, auf der die gesuchte Phototransformation sich abspielt, wobei diese Form vorzugsweise ein Drehparaboloid oder eine zylinder-parabolische Form ist, die einen thermischen Fänger darstellt, der verbunden ist mit einem planaren Photoreaktor (64 oder 65), verbunden mit genanntem thermischen Fänger, wobei eine solche Anordnung erlaubt, in beträchtlicher Weise die im Fänger konzentrierte Lichtintensität (bis zu 100fach und mehr) zu verstärken, bezogen auf die Verwendung eines einzelnen planaren Fängers.

32. Fänger gemäss Anspruch 31, dadurch gekennzeichnet, das der thermische Fänger (47, 48) aus Glas (79) besteht, eine reflektierende metallische Schicht (80) umfasst vor dem Glas, wobei die metallische Schicht durch eine Siliciumdioxid-Schicht (81) geschützt ist, die auf den Spiegel aufgedampft ist, wobei das Glas und die dünne Siliciumdioxid-Schicht den grössten Teil der Infrarot-Strahlen absorbieren.

33. Fänger gemäss einem der Ansprüche 31 und 32, dadurch gekennzeichnet, dass der planare Photoreaktor, verbunden mit dem thermischen Fänger, ein Photoreaktor gemäss einem der Ansprüche 11 bis 13 ist.

34. Fänger gemäss einem der Ansprüche 31 bis 33, dadurch gekennzeichnet, dass die Regulierung der Temperatur des Photoreaktors durchgeführt wird mit Hilfe von Regulierungs-Vorrichtungen mit Kühlrippen/-Flügel zur Kühlung (19), bei erzwungener Zirkulation von Luft (22) oder durch ein Röhren-Netz (72) mit Zirkulation einer Temperatur-Regulierungs-Flüssigkeit gemäss einem der Ansprüche 14 bis 18.

35. Fänger gemäss einem der Ansprüche 31 bis 33, dadurch gekennzeichnet, dass der Photoreaktor im wesentlichen gebildet wird aus zwei übereinander angeordneten, verbundenen, im Gegenstrom funktionierenden Reaktoren (57, 60), deren Dicke in der Grössenordnung von 20 mm für eine Scheibendicke der Grössenordnung von 15 mm ist.

36. Fänger gemäss Anspruch 34, dadurch gekennzeichnet, dass die Verknüpfung genannter zwei im Gegenstrom funktionierender Reaktoren (57, 60) einen kombinierten Photoreaktor der gleichzeitigen Phototransformation von getrennten α- und β-Säuren darstellt, anwesend jeweils in den zwei Kompartimenten (57, 60) des Photoreaktors, oder einen Photoreaktor für die Phototransformation von α-Säuren oder β-Säuren allein, durch Zirkulation von diesen aufeinanderfolgend in den zwei Kompartimenten (57, 60) des Photoreaktors.

37. Fänger gemäss einem der Ansprüche 31 bis 36, dadurch gekennzeichnet, dass der planare Photoreaktor ausgerüstet ist mit einer Vorrichtung zur Verfolgung (43) der Konzentrationen an α- und β-Säuren gemäss einem der Ansprüche 20 und 21.

38. Fänger gemäss einem der Ansprüche 35 bis 37, dadurch gekennzeichnet, dass der planare Photoreaktor ausgerüstet ist mit Elektroschiebern (68, 69, 70, 71) zur Steuerung der Zirkulation der Lösungen von α- und β-Säuren zu den Photoreaktoren (57, 60) und ausserhalb von diesen angesichts der Gewinnung der durch Phototransformation erhaltenen Iso-α- und/oder Desoxy-α-Säuren.

39. Fänger gemäss einem der Ansprüche 36 bis 38, dadurch gekennzeichnet, dass im planaren Photoreaktor (65 und 64) verbunden mit dem paraboloidalen (47) oder zylinder-paraboloidalen Konzentrator (48) die Phototransformation der α-Säuren im unteren Reaktor (57) und die Photolyse der β-Säuren im oberen Reaktor (60) durchgeführt wird.

40. Fänger gemäss Anspruch 39, dadurch gekennzeichnet, dass die Zirkulation der Lösung der zu phototransformierenden β-Säuren im oberen Reaktor (60) stattfindet im Pseudo-Gegenstrom, kontinuierlich oder diskontinuierlich, und die Phototransformation der Lösung der α-Säuren im unteren Reaktor (57) diskontinuierlich durchgeführt wird mit Zwischenschaltung eines Puffer-Reservoirs (75), verbunden mit einer Zirkulationspumpe (77), mit deren Hilfe entsprechende Mengen diskontinuierlich in den genannten unteren Reaktor eingeführt werden, einer vorbestimmten Reihenfolge folgend.

41. Vorrichtung zur Photolyse von α- und/oder β-Säuren, dadurch gekennzeichnet, dass sie in Kombination – einen Konzentrator von paraboloidaler oder zylinder-paraboloidaler Form, – eine erste Serie von planaren unteren, in Serie geschalteten Photoreaktoren; – eine zweite Serie planarer oberer, in Serie geschalteter Photoreaktoren; – wenigstens ein Puffer-Reservoir, verbunden mit einer Zirkulationspumpe zur Einführung vorbestimmter Mengen zu phototransformierender Säuren in die erste und/oder zweite Serie von Photoreaktoren; – wenigstens einen Auffang-Trog zur Gewinnung der durch Photolyse erhaltenen Iso-α- und/oder Desoxy-α-Säuren umfasst.

42. Vorrichtung gemäss Anspruch 41, dadurch gekennzeichnet, dass sie in Kombination – einen Konzentrator von paraboloidaler (47) oder zylinder-paraboloidaler Form (48) gemäss einem der Ansprüche 31 und 32; – eine erste Serie von unteren planaren, in Serie geschalteten, Photoreaktoren (57), gemäss einem der Ansprüche 35 und 36; – eine zweite Serie von planaren oberen, in Serie geschalteten Photoreaktoren (60), gemäss einem der Ansprüche 35 und 36; – wenigstens einen Trog zur Auflösung der zu phototransformierenden Säuren in Alkohol; – wenigstens eine Vorrichtung zum Entgasen von gelöstem Sauerstoff in der oder den Lösungen zu phototransformierenden Säuren, durch Durchblubbern von $CO_2$; – wenigstens ein Puffer-Reservoir verbunden mit einer Zirkulationspumpe zur Einführung vorbestimmter Mengen in die erste und/oder zweite Serie von Photoreaktoren; – wenigstens einen Auffang-Trog für die phototransformierten Lösungen; – wenigstens eine Alkohol-Destillations-Kolonne für die phototransformierten Lösungen; – wenigstens ein Rezyklisierungs-Rohr (87) des destillierten Alkohols in den entsprechenden Trog zur Auflösung; – Rückgewinnungs-Mittel der Iso-α- und/oder Desoxy-α-Säuren, erhalten durch Phototransformation, umfasst.

43. Vorrichtung gemäss Anspruch 42, zur Phototransformation von α-Säuren allein, dadurch gekennzeichnet, dass sie in Kombination mit einem paraboloidalen (47) oder zylinder-paraboloidalen Konzentrator (48) gemäss einem der Ansprüche 31 und 32, – einen Trog (82) zur Auflösung der α-Säuren, eingeführt in genannten Trog in Alkohol zu ungefähr 30 g/Liter; – einen Trog (83) zur Entfernung von in der Lösung aufgelöstem Sauerstoff; – ein Reservoir (84) zur Lagerung der entgasten Lösung; – ein Puffer-Reservoir (75), verbunden mit wenigstens einer Zirkulationspumpe (77); – eine erste Serie von unteren planaren in Serie geschalteten Photoreaktoren (57), gemäss einem der Ansprüche 35 und 36; – eine zweite Serie von oberen planaren in Serie geschalteten Photoreaktoren (60), gemäss einem der Ansprüche 35 und 36; – wenigstens ein Verbindungs-Rohr des Pufferreservoirs (75) mit der ersten Serie von Photoreaktoren, und wenigstens ein Verbindungs-Rohr des Puffer-Reservoirs (75) mit der zweiten Serie von Photoreaktoren; – ein Sammel-Reservoir (85) der phototransformierten Lösungen am Ausgang der Photoreaktoren; – eine Alkohol-Destillationskolonne (86) aus den gesammelten phototransformierten Lösungen; – ein Rezyklisierungs-Rohr (87) des durch Destillation abgetrennten Alkohols in den Trog (82) zur Auflösung; – und Mittel zur Wiedergewinnung

der Iso-α-Säuren am Ausgang der Destillationskolonne, umfasst.

44. Vorrichtung gemäss Anspruch 42, zur Phototransformation von β-Säuren allein, dadurch gekennzeichnet, dass sie in Kombination mit einem paraboloidalen (47) oder zylinder-paraboloidalen Konzentrator (48), gemäss einem der Ansprüche 31 und 32, – einen Trog (90) zur Auflösung der β-Säuren in Alkohol zu 30 g/Liter; – einen Trog (91) zur Entfernung des in der Lösung aufgelösten Sauerstoffs; – ein Reservoir (92) zur Lagerung der entgasten Lösung; – ein Puffer-Reservoir (93), verbunden mit wenigstens einer Zirkulationspumpe und versehen mit ergänzenden Mitteln zur Entfernung von in der Lösung gelöstem Sauerstoff, insbesondere wie Durchblubbern von $CO_2$; – eine erste Serie von unteren planaren in Serie geschalteten Photoreaktoren (57), gemäss einem der Ansprüche 35 und 36; – eine zweite Serie von oberen planaren in Serie geschalteten Photoreaktoren (60), gemäss einem der Ansprüche 35 und 36; wenigstens ein Verbindungs-Rohr des Puffer-Reservoirs (93) mit der ersten Serie von Photoreaktoren, und wenigstens ein Verbindungs-Rohr des Puffer-Reservoirs (93) mit der zweiten Serie von Photoreaktoren; – ein Sammel-Reservoir (94) der photolysierten Lösungen am Ausgang der Photoreaktoren; – eine Alkohol-Destillationskolonne (95) der gesammelten photolysierten Lösungen; – ein Rezyklisierungs-Rohr (96) des durch Destillation abgetrennten Alkohols in den Trog (90) zur Auflösung; – und Mittel zur Wiedergewinnung der Desoxy-α-Säuren am Ausgang der Destillationskolonne, umfasst.

45. Vorrichtung gemäss Anspruch 42, zur gleichzeitigen Phototransformation von α- und β-Säuren, vorher getrennt ausgehend von einem hochgereinigten Hopfenextrakt, dadurch gekennzeichnet, dass sie in Kombination mit einem paraboloidalen (47) oder zylinder-paraboloidalen Konzentrator (48), gemäss einem der Ansprüche 31 und 32, – einen Trog (82) zur Auflösung von α-Säuren in Alkohol zu 30 g/Liter; – einen Trog (90) zur Auflösung von β-Säuren in Alkohol zu 30 g/Liter; – einen Trog (93) zur Entfernung des Sauerstoffs, gelöst in der alkoholischen Lösung von α-Säuren; – einen Trog (91) zur Entfernung des in der alkoholischen Lösung von β-Säuren gelösten Sauerstoffes; – ein Reservoir (92) zur Lagerung der alkoholischen Lösungen von α-Säuren; – ein Reservoir (84) zur Lagerung der alkoholischen Lösungen von β-Säuren; – wenigstens ein Puffer-Reservoir (88) verbunden mit dem Lagerungs-Reservoir (84) der alkoholischen Lösung der α-Säuren und verknüpft mit wenigstens einer Zirkulationspumpe (77) zur Einführung der genannten Lösung in eine erste Serie von planaren unteren in Serie geschalteten Photoreaktoren (57); – ein Puffer-Reservoir (93) verbunden mit dem Lagerungs-Reservoir (92) der alkoholischen Lösung der β-Säuren, versehen mit ergänzenden Mitteln zur Entfernung von noch in genannter Lösung gelöstem Sauerstoff, und verknüpft mit wenigstens einer Zirkulationspumpe zur Einführung der genannten Lösung in eine zweite Serie von planaren oberen Photoreaktoren (60); – ein Sammel-Reservoir (86) der alkoholischen Lösungen durch Phototransformation erhaltener Iso-α-Säuren am Ausgang der ersten Serie von Photoreaktoren (57); – ein Sammel-Reservoir (94) der alkoholischen Lösungen durch Phototransformation erhaltener Desoxy-α-Säuren am Ausgang der zweiten Serie von Photoreaktoren (60); – eine erste Destillations-Abtrennkolonne (86) des Alkohols der phototransformierten Lösungen von Iso-α-Säuren; – eine zweite Destillations-Abtrennkolonne (95) des Alkohols der phototransformierten Lösungen von Desoxy-α-Säuren; – ein Rezyklisierungs-Rohr (87) des in der ersten Destillationskolonne abgetrennten Alkohols in den Trog (82) zur Herstellung der alkoholischen Lösung von α-Säuren; – ein Rezyklisierungs-Rohr (96) des in der zweiten Destillationskolonne (95) abgetrennten Alkohols in den Trog (90) zur Herstellung der alkoholischen Lösung von β-Säuren; – Mittel zur Wiedergewinnung von Iso-α-Säuren an ihrem Ausgang der ersten Kolonne; – und Mittel zur Wiedergewinnung von Desoxy-α-Säuren an ihrem Ausgang der zweiten Kolonne.

46. Fänger gemäss einem der Ansprüche 31 bis 40, dadurch gekennzeichnet, dass der paraboloidale (47) oder zylinder-paraboloidale Konzentrator (48) mit dem die Photoreaktoren verbunden sind, versehen ist mit einer Vorrichtung, die seine konstante Orientierung als Funktion der Position der Sonne, in an sich bekannter Weise, sicherstellt (49, 52 oder 55).

47. Fänger gemäss einem der Ansprüche 11 bis 40, dadurch gekennzeichnet, dass der Fänger verbunden ist mit Mittel zur Wiedergewinnung der Energie, die induziert wird durch die auftreffende durch den Fänger absorbierte und nicht für die Phototransformation verwendete Sonnenstrahlung und mit Vorrichtungen zur Nutzung von genannter konzentrierter Wärme für thermische insbesondere industrielle Anwendungen.

## Claims

1. Process for improving the value of practically pure α and β acids obtained from a highly purified hops extract, particularly by treatment by liquid carbon dioxide, the α and β acids obtained being, if necessary, separated by chromatography on a column of silica or of ion exchange resins comprising hydroxyl groups, then subjected to photoconversion by sunlight, characterised in that said photoconversion is effected by filtration of the sunlight in the wave length comprised between 300 and 440 nm, by concentration of the solar radiation by means of a collector suitable to obtain a light intensity at least equal to $I_a = 9.6 \times 10^{-5}$ kilowatts/liter and by maintaining the photoisomerisation reaction, at a substantially constant temperature, close to 60°C, so as to obtain an optical quantitative yield.

2. Process according to claim 1 characterised in that the photoconversion or photoisomerisation reaction – is maintained at a substantially constant temperature by coupling said photoreactor with a thermal detector.

3. Process according to claim 1 characterised in that the photoconversion of the α and/or β acids is effected in the solid phase period.

4. Process according to any one of claims 1 to 3, characterised in that the further conversion of the α and/or β acids is carried out in the liquid phase.

5. Process according to claim 4, characterised in that the α and/or β acids to be photoconverted are, prior to their introduction into the photoreactor, dissolved in an alcohol such as ethanol, t-butanol, methanol, isopropanol, the concentration of the α acids in the alcohol being of the order of 0.1 mole/liter (namely substantially 30 g/liter).

6. Process according to claim 5, characterised in the alcoholic solutions α and/or β acids are, prior to the photoconversion, freed from dissolved oxygen by degassing by bubbling $CO_2$.

7. Process according to any one of claims 5 and 6, characterised in that once the photoconversion is accomplished, the alcohol is removed by distillation.

8. Process according to claim 1, characterised in that the photoconversion of the α acids and of the β acids is effected simultaneously by means of two photoreactors associated by superposition, the photoconversion of the α acids taking place in the lower photoreactor.

9. Process according to claim 8, characterised in that the solutions of α acids and of β acids flow in counter current to one and other in their respective photoreactors.

10. Photoconversion collector for practising the process according to any one of claims 1 to 9, characterised in that it is essentially constituted by at least one photoreactor for the production of photoconversion of α and/or β acids into iso-α and/or desoxy-α acids coupled to at least one thermal sensor.

11. Collector according to claim 10, characterised in that it comprises a flat collector which comprises an absorber (2) borne by a rear insulating material (1) which defines with a window (3) transparent to the visible solar flux and opaque to the infra-red radiation of long wave lenghts (λ ≧2.5 μ) positioned at a certain interval from said absorber, a photoreactor which contains the α and/or β acids to be phototransformed, in solid form or in alcohol solution, a protection window (4) being if necessary superimposed on the window (3) constituting the wall of the photoreactor, at a certain interval from the latter.

12. Collector according to claim 11, characterised in that the protection window (4) of the window (3) constituting the wall of the photoreactor is also transparent to the visible solar flux and opaque to the infra-red radiation of long wave length (λ ≧2.5 μ).

13. Collector according to any one of claims 11 and 12, characterised in that it is constituted by the coupling of two superposed flat photoreactors which avoid absorption losses of the light, the first photoreactor (25) being bounded by the absorber (2) on its rear surface and by a window (28) on its front surface, and the second photoreactor (26) being bounded by this last indow and by a second window (29) which is superimposed on it at a certain interval, to constitute the wall of the second flat photoreactor, an external protection window (4) being if necessary, in addition, placed at a certain interval from said second window.

14. Collector according to any one of claims 10 to 13, characterised in that the flat collector is provided with means for regulating the temperature inside the one or more photoreactors.

15. Collector according to claim 14, characterised in that said means for regulating the temperature are constituted by said protection window (4).

16. Collector according to claim 14, characterised in that said regulation means are constituted by a plurality of orientable plates (19) whose position depends on a temperature sensor, which are interposed between the insulation (1) and the absorber (2).

17. Collector according to claim 14, characterised in that said regulation means are constituted by forced ventilation (22), interposed between the rear insulating material (1) and the absorber (2), which forced ventilation is ensured by a hollow metal structure (24) in which air is circulated at a suitable flow rate and at the external temperature, to ensure the cooling of the collector, this structure serving, in addition, as support for the absorber.

18. Collector according to claim 14, characterised in that said regulation means are constituted by a tubular network (72) for circulation of a cooling or heating liquid, interposed between the insulation (1) and the absorber (2), and in which the cooling or heating liquid flows at a flow rate regulated by any suitable means, and particularly by means of an electrovalve.

19. Collector according to any one of claims 11 to 18, characterised in thickness of the or of a photoreactor of the collector is comprised between 0.13 and 1 cm and is selected so as to ensure a maximum absorption of the photons useful for the photoconversion of the α and/or β acids as a function of the dwell time of the α and/or β acids in the photoreactor.

20. Collector according to any one of claims 11 to 19, characterised in that it is equipped with a device for following the photoconversion reaction which effects measurement of the photoconversion reaction in situ by spectrophotometry and which is advantageously constituted, in combination, by a neutral filter (33) of optical density $D_o$ measurable at the analysis wave length, which is comprised between 400 and 420 nm, and chosen as a function of the thickness of the or of one of the photoreactor(s) (particularly $D_o$ = 0.465 for a wave length of 410 nm and a thickness of the photoreactor of 2 mm), which neutral filter is associated with the or with one of the photoreactor(s), an interference filter (34) for the mean value of 410 nm, a reference photocell (35) and a measuring photocell (36).

21. Collector according to claim 20, characterised in that the neutral filter (33) is formed of a glass slightly absorbent in the mass.

22. Collector according to any one of claims 11 to 21, applied to the photoconversion of $\alpha$ and/or $\beta$ acids in alcoholic solution, characterised in that it is constituted by a plurality of the individual reactors $(C_1$ to $C_{20})$ mounted in series and/or in parallel, in which flow successively an alcoholic solution of $\alpha$ and/or $\beta$ acids at increasing concentrations from the inlet photoreactor to the outlet photoreactor, such arrangement enabling the operation of the photoconversion collector continuously.

23. Collector according to any one of claims 11 to 21, applied to the photoconversion of $\alpha$ and/or $\beta$ acids in alcoholic solution, characterised in that it is constituted by a plurality of the individual reactors $(C_1$ to $C_2)$ mounted in series and/or in parallel, in which flows successively an alcoholic solution of $\alpha$ and/or $\beta$ acids of same concentration, such arrangement operating discontinuously.

24. Collector according to any one of claims 11 to 23, characterised in that it is mounted fixed.

25. Collector according to any one of claims 11 to 23, characterised in that it is mounted in a mounting ensuring the permanent tracking of the sun, known in itself.

26. Collector according to any one of claims 11 to 23, characterised in that it comprises, in combination, at least one photoreactor (46) associated with a thermal sensor (42) which initiates thermal regulation of the photoreactor.

27. Collector according to claim 26, characterised in that the thermal sensor is constituted by an absorber (44) comprising a black metal sheet on which are welded fins for cooling (45) by ventilation.

28. Collector according to any one of claims 26 to 27, for its application to the photoconversion of $\alpha$ and/or $\beta$ acids in alcoholic solution, characterised in that a safety device comprising a rapid opening electrovalve for the draining of the alcohol or an opaque shutterplate for limiting the flux of photons in the photoreactor(s), is associated with the(se) latter to prevent a rise in temperature in the photoreactor in the case of non-operation of the thermal regulation detector.

29. Collector according to any one of claims 11 to 28, characterised in that it is equipped with safety valves associated with at least one photoreactor to avoid overpressures in the latter capable of damaging the windows.

30. Collector according to any one of claims 11 to 29, for use in the photoconversion of $\alpha$ and/or $\beta$ acids in alcoholic solution, characterised in that it is constituted by a distillation collector enabling the distillation of the alcohol once the photoconversion has been effected.

31. Collector according to claim 10, characterised in that it comprises a collector of such shape that the solar radiation collected on one surface is deflected by suitable means to another smaller surface, on which the desired photoconversion occurs, this shape being preferably that of a paraboloid of revolution or cylindro-parabolic shape, which constitutes a thermal detector, which is associated with a flat photoreactor (64 or 65), fast to said thermal detector such a mounting enabling the light intensity to considerably increased (up to 100 times and more) with respect to the use of only a flat collector.

32. Collector according to claim 31, characterised in that the thermal detector (47, 48) is constructed of glass (79) comprising a reflecting metal layer (80) in front of the glass, which metal layer is protected by a silica layer (81) vaporised onto the mirror, the glass and the thin silica layer absorbing the major part of the infra-red radiation.

33. Collector according to any one of claims 31 and 32, characterised in that the flat photoreactor fast to the thermal detector is a photoreactor according to any one of claims 11 to 13.

34. Collector according to any one of claims 31 to 33, characterised in that the regulation of the temperature of the photoreactor is effected by means of regulating devices with orientable blades (19), with forced air ventilation (22) or by a tubular network (72) for the circulation of a temperature regulating liquid according to any one of claims 14 to 18.

35. Collector according to any one of claims 31 to 33, characterised in that the photoreactor is essentially formed of two superposed reactors (57, 60), coupled, operating in counter-current, whose thickness is of the order of 20 mm for a thickness of the window of 15 mm.

36. Collector according to claim 34, characterised in that the coupling of said two reactors (57, 60) operating in counter-current constitutes a mixed photoreactor for simultaneous conversion of the separate $\alpha$ and $\beta$ acids, present respectively in the two compartments (57, 60) of the photoreactor, or a photoreactor for the photoconversion of the $\alpha$ acids or of the $\beta$ acids only, by circulation of the latter successively in the two compartments (57, 60) of the photoreactor.

37. Collector according to any one of claims 31 to 36, characterised in that the photoreactor is equipped with a device for following (43) the concentrations of $\alpha$ and $\beta$ acids according to any one of claims 20 and 21.

38. Collector according to any one of claims 35 to 37, characterised in that the flat photoreactor is equipped with electrovalves (68, 69, 70, 71) for controlling the circulation of the solutions of $\alpha$ and $\beta$ acids to the photoreactors (57, 60) and out of the latter for the recovery of the iso-$\alpha$ and/or desoxy-$\alpha$ acids obtained par by photoconversion.

39. Collector according to any one of claims 36 to 38, characterised in that in the flat photoreactor (65 or 64) fast to the paraboloidal (47) or cylindroparabolic (48) concentrator, the photoconversion of the $\alpha$ acids is effected in the lower reactor (57) and the photoconversion of the $\beta$ acids is effected in the upper reactor (60).

40. Collector according to claim 39, characterised in that the circulation of the solution of β acids to be photoconverted to the upper reactor (60) is done in pseudo counter-current, continuously or discontinuously, and the photoconversion of the solution of α acids in the lower reactor (57) is effected discontinuously with the interposition of a buffer-reservoir (75) associated with a circulating pump (77) by means of which suitable charges are introduced discontinuously into said lower reactor, at a pre-determined rate.

41. Installation for the photoconversion of α and/or β acids, characterised in that it comprises, in combination: – a concentrator of paraboloidal or cylindroparabolic shape; a first series flat lower photoreactors mounted in series; – a second series of flat upper photoreactors mounted in series; – at least one buffer-reservoir associated with a circulating pump for the introduction of predetermined charges of acids to be photoconverted in the first and/or the second series of photoreactors; – at least one collecting tank for the recovery of the iso-α acids and/or the desoxy-α acids obtained by photoconversion.

42. Installation according to claim 41, characterised in that it comprises, in combination: – a concentrator of paraboloidal shape (47) or cylindroparabolic (48) shape, according to any one of claims 31 and 32; – a first series of flat lower photoreactors (57) mounted in series, according to any one of claims 35 and 36; – a second series of flat upper photoreactors (60) mounted in series, according to any one of claims 35 to 36; – at least one tank for dissolving acids to be photoconverted in alcohol; – at least one degassing device for the oxygen dissolved in the one or more solution(s) of acid(s) to be photoconverted, by bubbling $CO_2$; at least one buffer-reservoir associated with a circulating pump for the introduction of predetermined charges into the first and/or second series of photoreactors; – at least one collecting tank for photoconverted solutions; – at least one distillation column for the alcohol of the photoconverted solutions; – at least one recycling pipe (87) for the alcohol distilled in the corresponding solution forming tank; – means for the recovery of the iso-α acids and/or of the desoxy-α acids obtained by photoconversion.

43. Installation according to claim 42, for the photoconversion of the α acids only, characterised in that it comprises, in combination with a paraboloidal concentrator (47) or cylindro-parabolic (48) concentrator, according to any one of claims 31 and 32; – a dissolving tank (82) for the α acids introduced into the said tank in alcohol in a ratio of 30 g/litre approximately; – a tank (83) for the removal of the oxygen dissolved in the solution; – a reservoir (84) for storing of the degassed solution; – a reservoir-buffer (75) associated with at least one circulating pump (77); – a first series of flat lower photoreactors (57) mounted in series, according to any one of claims 35 and 36; – a second series of flat upper photoreactors (60) mounted in series, according to any one of claims 35 and 36; – at least one connecting pipe of the reservoir-buffer (75) with the first series of photoreactors, and at least one connecting pipe of the reservoir-buffer (75) with the second series of photoreactors; – a collector reservoir (85) for the photoconverted solutions at the outlet from the photoreactors; – a distillation column (86) for the alcohol from the collected photoconverted solutions; – a recycling pipe (87) for the alcohol separated by distillation, in the dissolving tank (82), – and recovering means for the iso-α acids at the outlet of the distillation column.

44. Installation according to claim 42, for the photoconversion of β acids only, characterised in that it comprises, in combination with a paraboloidal (47) or cylindro-parabolic (48) concentrator, according to any one of claims 31 and 32; – a tank (90) for dissolving β acids in alcohol, in a ratio of 30 g/litre; – a tank (91) for the removal of the oxygen dissolved in the solution; – a storage reservoir (92) for the degassed solution; – a reservoir-buffer (93) associated with at least one circulating pump, and provided with complementary means for the removal of the oxygen dissolved in the solution, such as bubbling $CO_2$ especially; – a first series of flat lower photoreactors (57) mounted in series, according to any one of claims 35 and 36; – a second series of flat upper photoreactors (60) mounted in series, according to any one of claims 35 and 36; – at least one connecting pipe from the reservoir buffer (93) with the first series of photoreactors and at least one connecting pipe from the reservoir buffer (93) with the second series of photoreactors; – a reservoir (94) for collecting the photoconverted solutions at their outlet from the photoreactors; – a distillation column (95) for the alcohol from the collected photoconverted solutions; – a recycling pipe (96) for the alcohol separated by distillation, into the dissolving tank (90) – and means for the recovery of the desoxy-α acids at the outlet of the distillation column.

45. Installation according to claim 42, for the simultaneous photoconversion of the α and β acids previously separated from a highly purified hops extract, characterised in that it comprises in combination with a paraboloidal (47) or cylindro-parabolic (48) concentrator, according to any one of claims 31 and 32; a dissolving tank (82) for the α acids in alcohol in the ratio of 30 g/litre; a dissolving tank (90) for the β acids in alcohol in the ratio of 30 g/litre; – a removal tank (83) for the $O_2$ dissolved in the alcoholic solution of α acids; – a removal tank (91) for the $O_2$ dissolved in the alcoholic solution of β acids; a storage reservoir (92) for the alcoholic solution of α acids; – a storage reservoir (84) for the alcoholic solution of β acids; – at least one reservoir-buffer (88) connected to the storage reservoir (84) of the alcoholic solution of α acids associated with at least one circulating pump (77) for the introduction of said solution into a first series of flat lower photoreactors (57) mounted in series; a reservoir-buffer (93) connected to the storage reservoir (92) of the alcoholic solution of β acids provided with complementary means for the removal of the $O_2$ still dis-

solved in said solution, and associated with at least one circulating pump for the introduction of said solution into a second series of flat upper photoreactors (60); – a collecting reservoir (86) for the alcoholic solutions of iso-α acids obtained by photoconversion at the outlet of the first series of photoreactors (57); – a collecting reservoir (94) for the alcoholic solutions of desoxy-α acids obtained by photoconversion, at the outlet of the second series of photoreactors (60); – a first separating column (86) by distillation of the alcohol from the photoconverted solutions of iso-α acids; – a second column (95) for the separation by distillation of the alcohol from the photoconverted solutions of desoxy-α acids; – a recycling pipe (87) for the alcohol separated from the first distillation column, into the tank (82) for the placing in alcoholic solution of the α acids; – a recycling pipe (96) for the alcohol separated in the second distillation column (95), into the tank (90) for the placing in alcoholic solution of the β acids; – recovery means for the iso-α acids and their outlet from the first column; – and recovery means for the desoxy-α acids at their outlet from the second column.

46. Collector according to any one of claims 31 to 40, characterised in that the paraboloidal (47) or cylindro-parabolic (48) concentrator to which are fastened the photoreactors, is provided with a device, ensuring its constant orientation as a function of the position of the sun, known in itself (49, 52 or 55).

47. Collector according to any one of claims 11 to 40, characterised in that the collector is coupled with recovery means for the energy induced by the incidence solar radiation absorbed by the collector and unused for the photoconversion, and with installations for the utilisation of said concentrated heat for thermal applications, particularly industrial.

Fig. 1

Fig. 2

Fig. 3

Fig. 4

Fig. 6

Fig. 5

Fig. 7

| $c_{11}$ | $c_{12}$ | $c_{13}$ | $c_{14}$ | $c_{15}$ | $c_{16}$ | $c_{17}$ | $c_{18}$ | $c_{19}$ | $c_{20}$ | → 32 |
|---|---|---|---|---|---|---|---|---|---|---|
| $c_{10}$ | $c_9$ | $c_8$ | $c_7$ | $c_6$ | $c_5$ | $c_4$ | $c_3$ | $c_2$ | $c_1$ | ← 31 |

Fig. 8

Fig. 9

Fig.10

Fig.11

Fig. 12

Fig.13

Fig.14

Fig.15

0 048 207

Fig.16

a          b          c

Fig.17

Fig.18

39

Fig.19

47   65

Fig.20

48   74   73   64

Fig.21

79   80   81

Fig.22

Fig. 23

Fig 24

Fig. 25

Fig. 26

Fig. 27